# EUROPEAN PATENT APPLICATION

(11) **EP 4 556 637 A1**
(43) Date of publication of application: **21.05.2025**
(21) Application number: 24207476.3
(22) Date of filing: 18.10.2024
(51) Int. Cl.: E02F 3/34, E02F 3/28, E02F 9/08, B66F 9/075, B60K 1/04

(54) **A MATERIAL HANDLING MACHINE**

(30) Priority: 20.10.2023 GB 202316111; 15.10.2024 GB 202415169
(71) Applicant: J.C. Bamford Excavators Limited, Uttoxeter Staffordshire ST14 5JP (GB)
(72) Inventor: DE BERRY, Sam, Uttoxeter ST14 5JP (GB); SOUTHWOOD, Alun, Uttoxeter ST14 5JP (GB); HAWORTH, Robert, Uttoxeter ST14 5JP (GB); SUNDERLAND, Jake, Uttoxeter ST14 5JP (GB); WALSHAM, Paul, Uttoxeter ST14 5JP (GB); IRELAND, Jordan, Uttoxeter ST14 5JP (GB)
(74) Representative: McGeough, Gemma Ann

(57) **Abstract**

A working machine having a front and a rear defined by the principal direction of travel, defining a fore-aft centreline, and comprising: a body mounted on a ground-engaging structure to permit movement of the machine over the ground; an operator cab mounted on the body towards a first side of the centreline; a single lifting arm pivotably mounted towards an aft end of the body; a drive assembly comprising a first electric motor for providing power to the ground-engaging structure; and at least one high voltage electric energy storage unit, located aft of the cab. The lifting arm is located within a lifting arm housing. The lifting arm housing comprises first and second sidewalls. The first electric motor is located to a second side of the centreline, opposite the first side of the centreline. The or each electric energy storage unit is located to the cab side of the lifting arm housing.

## Description

### FIELD

This invention relates to a working machine having a lifting arm. More particularly, this invention relates to an electrically powered working machine.

### BACKGROUND

Telehandlers are generally well known and comprise a work machine with a pivoting telescopically extending lifting arm which allows items to be transported between different locations at varying heights with relative ease and flexibility. Telehandlers are often utilised in agriculture, construction or logistics, amongst other sectors.

Telehandlers are often described in relation to their maximum lifting load and the vertical height a load can be lifted to. Typically, loads and the lifting height will vary depending on the type of machine and industry in which it is used. For example, a compact telehandler may be rated to lift around 1400kg to a vertical height of 4m, with a larger agricultural machine lifting around 6000kg to a vertical height of 8m. However, a large range of rated loads and lifting heights are possible with some machines being configured to lift to 20m or higher and greater weights.

Another type of material handling machine are known as rotating telehandlers or roto-telehandlers or simply "rotos". These machines are configured to slew about a main vertical axis such that a main body which carries the working arm is able to rotate with respect to a ground engaging structure and chassis. Such machines are generally larger than conventional telehandlers and can handle larger loads at extended heights, e.g. in excess of 5000kg to heights above 20m, although this is not a limitation and compact roto-telehandlers which lift smaller loads to lower heights exist. Roto-telehandlers are typically used when stationary but this is not a limitation.

Other material handling machines include so-called skid steers which may also be equipped with a telescopic arm. Skid steers generally comprise a compact rigid frame with fixed wheels or tracks which do not pivot relative to the body to effect steering. The respective wheels or tracks on each side of the machine are driven in unison and have independent speed control relative to the other side such that changing the relative speed results in a change in direction. Skid steers generally have limited lifting capacity and height due to the compact nature of the machine.

A yet further type of material handling machine is a wheeled loading shovel which may also be provided with a telescopically extending shovel arm. Generally, wheeled loading shovels are characterised by an articulating chassis to effect steering. These machines are typically used with a shovel for loading large quantities of materials into a transportation vehicle or around a location and have limited extension.

Telehandlers of the type of which this disclosure is concerned may thus be differentiated over other types of material handling machine by having steerable wheels which move relative to the chassis, either in two wheel or four-wheel steering modes, and comprise a pivoting working arm or boom which is provided in a fixed relation to the chassis and ground engaging structure. Telehandlers may also be characterised by their lift capacity and height, which may generally be taken to be above 1200kg and 3m respectively.

Within telehandlers, it is commonplace to refer to the smaller machines as compact telehandlers. These machines have relatively large lifting capacity in terms of height and load but are sufficiently compact to offer improved access and, in some instances, a weight which allows towing on a conventional braked trailer with a combined machine and trailer weight of 3500kg, this being a legislative limit in some countries and required for CE certification in Europe. In order to account for the trailer weight, it is an aim for compact telehandlers to have a weight between 2.5T and 2.95T. An ideal weight may be considered to be around 2.7T. The external width of a compact telehandler would typically be at or under 1.6m to suit access requirements on typical worksites where a compact may be utilised.

Compact telehandlers exist in the market but, due to the desire to have a restricted width and weight, typically have a reduced cab width when compared to their larger counterparts. This can make working conditions for operators more restricted which in turn can lead to operator fatigue across a working shift. Fatigue may lead to a lack of efficiency and attentiveness which, in turn, may lead to mistakes and reduced safety.

Working machines are typically diesel-powered. However, there is a drive in the industry to move towards hybrid, electric or hydrogen powered vehicles, particularly where such vehicles are used indoors. One difficulty with this is removal of the diesel engine, since this significantly alters the weight distribution of the machine and has implications for the stability of the working machine.

Re-designing the working machine to be powered by an electric motor or motors rather than by a diesel engine can also lead to a requirement for investment in new infrastructure such as assembly lines, and reduced efficiency of assembly and maintenance operations due to the different layout of an electrically-powered machine. Other factors such as cooling must also be taken into consideration. In a compact machine, installation of components can be difficult due to restricted space envelopes.

The present invention seeks to provide an improved compact telehandler.

### SUMMARY

The present invention provides a working machine, a method of installing a drive assembly on a working machine, a method of installing a plurality of electric energy storage units in a working machine, and a method of installing a valve block on a working machine, according to the appended claims.

According to a first aspect of the present disclosure, there is provided a working machine, e.g. a telehandler. The working machine may comprise a front and a rear defined by the principal direction of travel. The machine may define a fore-aft centreline.

The machine may comprise a body mounted on a ground-engaging structure to permit movement of the machine over the ground.

The machine may comprise an operator cab. The operator cab may be mounted on the body towards a first side of the centreline.

The machine may comprise a single lifting arm. The lifting arm may be pivotably mounted towards an aft end of the body. The lifting arm may be located within a lifting arm housing. The lifting arm housing may comprise first and second sidewalls.

The machine may comprise a drive assembly. The drive assembly may comprise a first electric motor for providing power to the ground-engaging structure. The first electric motor may be located to a second side of the centreline, opposite the first side of the centreline.

The machine may comprise at least one high voltage electric energy storage unit. The high voltage electric energy storage unit may be located aft of the cab. The or each electric energy storage unit may be located to the cab side of the lifting arm housing.

Locating the electric energy storage unit aft of the cab addresses the issue of weight distribution in the absence of a diesel engine. The weight of the electric energy storage unit or units in that location improves stability of the working machine and provides a counterbalance to the lifting arm. Locating the electric motor towards the opposite side of the machine to the cab provides design options for component location.

The drive assembly may comprise a gear train for transferring power from the first electric motor to the ground-engaging structure. The first electric motor and/or the gear train may extend at least in part beneath the lifting arm.

Such an arrangement is advantageously compact.

The first electric motor and/or the gear train may extend through an aperture in the first sidewall of the lifting arm housing and beneath the lifting arm.

20% to 60% of the first electric motor may extend to the cab side of the first sidewall.

30% to 50% of the first electric motor may extend to the cab side of the first sidewall. Substantially 40% of the first electric motor may extend to the cab side of the first sidewall.

The drive assembly may comprise a brake assembly defining a longitudinal axis. The gear train may comprise an output having an axis of rotation. Said output axis of rotation may be co-axial with the brake assembly longitudinal axis.

This relationship between the brake assembly and the gear train allows the components to be installed as a unit, improving efficiency, and enables a compact machine.

The gear train may define a longitudinal axis between an input and an output thereof. The gear train longitudinal axis may be at an angle of between 30° and 50° to the horizontal.

The gear train longitudinal axis may be at an angle of substantially 40° to the horizontal.

The working machine may further comprise a first drive shaft for transferring power from the gear train to a fore axle of the ground-engaging structure. The working machine may further comprise a second drive shaft for transferring power from the gear train to an aft axle of the ground-engaging structure.

Advantageously, the gear train and the two drive shafts enable the use of a single electric motor for powering the ground-engaging structure, reducing cost and weight and enabling a compact machine.

The drive assembly may be mounted to the body at a plurality of drive assembly mounting points. At least one drive assembly mounting point may be provided on the first sidewall of the lifting arm housing. At least one drive assembly mounting point may be provided on the second sidewall of the lifting arm housing.

The first sidewall may be outboard of the second sidewall.

At least first and second drive assembly mounting points may be provided on the first sidewall of the lifting arm housing. At least one drive assembly mounting point may be provided on the second sidewall of the lifting arm housing.

Advantageously, as well as securely mounting the drive assembly to the chassis, this arrangement of mounting points facilitates assembly of the machine. That is, installation of the drive assembly is facilitated by the arrangement of mounting points.

The first drive assembly mounting point may be provided above the aperture. The second drive assembly mounting point may be provided below the aperture.

The drive assembly may be pivotable in relation to the first mounting point.

The machine body may comprise an enclosure in which the or each electric energy storage unit is housed.

The enclosure and the offset serve to protect the batteries from damage.

The enclosure may be offset inboard from the rear of the machine.

The enclosure may be located to the cab side of the lifting arm housing.

The working machine may further comprise an electric energy storage unit charger for charging the or each electric energy storage unit. The working machine may further comprise a charge port for connection of the charger to an external power source. The charger and the charge port may be included in a cartridge.

Simple and efficient installation of the charger and charge point is enabled.

The cartridge may be configured for installation within said enclosure.

The operator cab may comprise a door on the cab side of the body. The charge point may be located on the cab side of the body.

Convenient access to the charge point is thus provided.

The charge point may be inset from an aft-most point of the machine.

The charge point being set in from the rear or aft of the machine provides protection from damage.

The working machine may comprise two or more electric energy storage units. The electric energy storage units may be secured to one another so as to be configured for installation on the machine as a single subassembly.

The batteries being secured to one another in a subassembly prior to installation on the machine makes installation more efficient.

The machine may comprise an upper layer and a lower layer of electric energy storage units offset from one another in at least one horizontal direction.

The electric energy storage units being offset from one another provides access to the lower layer of electric energy storage units, e.g. for connection.

The or each electric energy storage unit may be elongate, such that a longitudinal axis is defined by said electric energy storage unit. The or each electric energy storage unit may be orientated such that said longitudinal axis is substantially vertical.

Such an orientation and arrangement provides a compact means of locating the electric energy storage unit on the machine.

The working machine may comprise a plurality of electric energy storage units arranged adjacent one another.

The or each electric energy storage unit may comprise a connector located at an upper end thereof.

Connectors being positioned at an upper end of each electric energy storage unit improves ease of connection.

The working machine may further comprise a side enclosure at the lifting arm side of the body. The working machine may further comprise a first inverter associated with the first electric motor. The first inverter may be located within the side enclosure.

The first electric motor may be at least partially located within the side enclosure.

The working machine may further comprise a hydraulic pump for actuation of the lifting arm. The working machine may further comprise a hydraulic tank associated with the hydraulic pump. The hydraulic pump and the hydraulic tank may be located within the side enclosure.

Location of the inverter and/or the hydraulic pump and hydraulic pump within a side enclosure enables a compact machine and protects the inverter from damage.

The hydraulic tank may be shaped so as to fit within a space envelope defined at least in part by said first electric motor.

The hydraulic tank being shaped to fit around other components such as the first electric motor enables the components to fit around one another and so take up less space, allowing a more compact machine.

The working machine may further comprise a second electric motor configured for actuation of said hydraulic pump. The second electric motor may be located within the side enclosure.

The working machine may further comprise a second inverter associated with the second electric motor. The second inverter may be located within the side enclosure.

Location of the second electric motor and/or the second inverter in the side enclosure allows for a more compact machine.

The working machine may further comprise an auxiliary electric energy storage unit for auxiliary systems. The auxiliary electric energy storage unit may be located within the side enclosure.

The working machine may further comprise, located within the side enclosure, a brake fluid reservoir, and/or a washer fluid reservoir, and/or an isolator, and/or a power distribution unit.

The working machine may further comprise a mounting bracket located within the side enclosure. The mounting bracket may be configured for mounting at least two components, for example a hydraulic tank and an auxiliary electric energy storage unit.

Shared mounting brackets advantageously minimises the weight of the machine.

The working machine may further comprise a valve block. The valve block may be secured to an underside of the machine.

Positioning of the valve block beneath the machine rather than in a conventional location to the side of a machine opens up space at the side of the machine for other components, e.g. for an ECU. Additionally, ease of fitting the valve block to the machine is improved.

The valve block may comprise electro-hydraulic valves.

The working machine may comprise a mounting cradle for securing said valve block to the machine. The mounting cradle may be secured to the body of the machine.

The mounting cradle may be substantially U-shaped.

The cab may be mountable to the machine as a unit comprising a floorplate, a roof, an aft wall, a front wall, and first and second sidewalls.

Installation of the cab as a unit improves efficiency of assembly. Advantageously, the machine being electrically powered allows installation of the cab as a unit, as only an electrical connection is required.

According to a second aspect of the present disclosure, there is provided a method of installing a drive assembly according the first aspect of the present disclosure. The drive assembly may define a longitudinal axis. The method may comprise the step of orienting the drive assembly such that the longitudinal axis is at a first angle to the horizontal. The method may comprise the step of securing the drive assembly to the first sidewall at a first mounting point. The method may comprise the step of pivoting the drive assembly about the first mounting point such that the longitudinal axis is at a second angle to the horizontal. The method may comprise the step of securing the drive assembly to the body at a second mounting point.

Advantageously, adjusting the orientation of the drive assembly during installation allows the drive assembly to be installed around other components and housing of the machine, so that the machine can be more compact. The drive assembly can be installed so as to extend through the aperture in the first sidewall, again enabling a compact machine.

The first angle may be substantially zero.

Arranging the drive assembly at such an angle allows for a compact arrangement of components.

The second angle may be in the range of 30° to 50°.

The second angle may be substantially 40°.

The second mounting point may be at the first sidewall.

The method may further comprise the step of securing the drive assembly to the body at a third mounting point.

Securing the drive assembly in such a way advantageously makes use of the lifting arm housing, limiting the need for additional components and so advantageously minimising weight.

The third mounting point may be at the second sidewall.

According to a third aspect of the present disclosure, there is provided a working machine. The working machine may have a front and a rear defined by the principal direction of travel. The working machine may define a fore-aft centreline. The working machine may comprise a body mounted on a ground-engaging structure to permit movement of the machine over the ground. The working machine may comprise an operator cab mounted on the body towards a first side of the centreline. The working machine may comprise a single lifting arm pivotably mounted towards an aft end of the body. The lifting arm may be located within a lifting arm housing. The lifting arm housing may comprise first and second sidewalls. The working machine may comprise a drive assembly. The drive assembly may comprise a first electric motor for providing power to the ground-engaging structure. The drive assembly may comprise a gear train for transferring power from the first electric motor to the ground-engaging structure. The first electric motor and/or the gear train may extend at least in part beneath the lifting arm.

The first electric motor may be located to a second side of the centreline, opposite the first side of the centreline.

The first electric motor and/or the gear train may extend through an aperture in the first sidewall of the lifting arm housing and beneath the lifting arm.

Such an arrangement is advantageously compact.

20% to 60% of the first electric motor may extend to the cab side of the first sidewall.

30% to 50% of the first electric motor may extend to the cab side of the first sidewall.

Substantially 40% of the first electric motor may extend to the cab side of the first sidewall.

The drive assembly may comprise a brake assembly defining a longitudinal axis. The gear train may comprise an output having an axis of rotation. The output axis of rotation may be co-axial with the brake assembly longitudinal axis.

This relationship between the brake assembly and the gear train allows the components to be installed as a unit, improving efficiency, and enables a compact machine.

The gear train may define a longitudinal axis between an input and an output thereof. The gear train longitudinal axis may be at an angle of between 30° and 50° to the horizontal.

The gear train longitudinal axis may be at an angle of substantially 40° to the horizontal.

The working machine may further comprise a first drive shaft for transferring power from the gear train to a fore axle of the ground-engaging structure. The working machine may further comprise a second drive shaft for transferring power from the gear train to an aft axle of the ground-engaging structure.

Advantageously, the gear train and the two drive shafts enable the use of a single electric motor for powering the ground-engaging structure, reducing cost and weight and enabling a compact machine.

The drive assembly may be mounted to the body at a plurality of drive assembly mounting points. At least one drive assembly mounting point may be provided on the first sidewall of the lifting arm housing. At least one drive assembly mounting point may be provided on the second sidewall of the lifting arm housing.

The first sidewall may be outboard of the second sidewall.

At least first and second drive assembly mounting points may be provided on the first sidewall of the lifting arm housing. At least one drive assembly mounting point may be provided on the second sidewall of the lifting arm housing.

Advantageously, as well as securely mounting the drive assembly to the chassis, this arrangement of mounting points facilitates assembly of the machine. That is, installation of the drive assembly is facilitated by the arrangement of mounting points.

The first drive assembly mounting point may be provided above the aperture. The second drive assembly mounting point may be provided below the aperture.

The drive assembly may be pivotable in relation to the first mounting point.

According to a fourth aspect of the present disclosure, there is provided a method of installing a drive assembly on a working machine. The working machine may have a body mounted on a ground-engaging structure to permit movement of the machine over the ground. The drive assembly may comprise an electric motor for providing power to the ground-engaging and a gear train. The gear train may define a longitudinal axis between an input and an output thereof. The method may comprise the step of orienting the drive assembly such that the longitudinal axis is at a first angle to the horizontal. The method may comprise the step of securing the drive assembly to the machine at a first mounting point. The method may comprise the step of pivoting the drive assembly about the first mounting point such that the longitudinal axis is at a second angle to the horizontal. The method may comprise the step of securing the drive assembly to the body at a second mounting point.

Advantageously, adjusting the orientation of the drive assembly during installation allows the drive assembly to be installed around other components and housing of the machine, so that the machine can be more compact. The drive assembly can be installed so as to extend through the aperture in the first sidewall, again enabling a compact machine.

The first angle may be substantially zero.

Arranging the drive assembly at such an angle allows for a compact arrangement of components.

The second angle may be in the range of 30° to 50°.

The second angle may be substantially 40°.

The working machine may comprise a single lifting arm. The lifting arm may be pivotably mounted towards an aft end of the body. The lifting arm may be located within a lifting arm housing. The lifting arm housing may comprise first and second sidewalls. The first mounting point may be at the first sidewall. The second mounting point may be at the first sidewall. The method may further comprise the step of securing the drive assembly to the body at a third mounting point.

Securing the drive assembly in such a way advantageously makes use of the lifting arm housing, limiting the need for additional components and so advantageously minimising weight.

The third mounting point may be at the second sidewall.

The electric motor and/or the gear train may extend through an aperture in the first sidewall of the lifting arm housing and beneath the lifting arm.

According to a fifth aspect of the present disclosure, there is provided a working machine. The working machine may have a front and a rear defined by the principal direction of travel. The working machine may define a fore-aft centreline. The working machine may comprise a body mounted on a ground-engaging structure to permit movement of the machine over the ground. The working machine may comprise an operator cab mounted on the body towards a first side of the centreline. The working machine may comprise a single lifting arm pivotably mounted towards an aft end of the body. The lifting arm may be located within a lifting arm housing. The lifting arm housing may comprise first and second sidewalls. The working machine may comprise at least one high voltage electric energy storage unit. The or each electric energy storage unit may be located aft of the cab. The or each electric energy storage unit may be located to the cab side of the lifting arm housing.

Locating the electric energy storage unit aft of the cab addresses the issue of weight distribution in the absence of a diesel engine. The weight of the electric energy storage unit or units in that location improves stability of the working machine and provides a counterbalance to the lifting arm.

The machine body may comprise an enclosure in which the or each electric energy storage unit is housed.

The enclosure may be offset inboard from the rear of the machine.

The enclosure and the offset serve to protect the batteries from damage.

The enclosure may be located to the cab side of the lifting arm housing.

The working machine may further comprise an electric energy storage unit charger for charging the or each electric energy storage unit. The working machine may further comprise a charge port for connection of the charger to an external power source. The charger and the charge port may be included in a cartridge.

Simple and efficient installation of the charger and charge point is enabled.

The cartridge may be configured for installation within said enclosure.

The operator cab may comprise a door on the cab side of the body. The charge point may be located on the cab side of the body.

Convenient access to the charge point is thus provided.

The charge point may be inset from an aft-most point of the machine.

The charge point being set in from the rear or aft of the machine provides protection from damage.

The working machine may comprise two or more electric energy storage units. The electric energy storage units may be secured to one another so as to be configured for installation on the machine as a single subassembly.

The batteries being secured to one another in a subassembly prior to installation on the machine makes installation more efficient.

The working machine may comprise an upper layer and a lower layer of electric energy storage units offset from one another in at least one horizontal direction.

The electric energy storage units being offset from one another provides access to the lower layer of electric energy storage units, e.g. for connection.

The or each electric energy storage unit may be elongate, such that a longitudinal axis is defined by said electric energy storage unit. The or each electric energy storage unit may be orientated such that said longitudinal axis is substantially vertical.

Such an orientation and arrangement provides a compact means of locating the electric energy storage unit on the machine.

The working machine may comprise a plurality of electric energy storage units arranged adjacent one another.

The or each electric energy storage unit may comprise a connector located at an upper end thereof.

Connectors being positioned at an upper end of each electric energy storage unit improves ease of connection.

According to a sixth aspect of the present disclosure, there is provided a method of installing a plurality of electric energy storage units in a working machine according to the fifth aspect of the present disclosure. The method may comprise the step of securing said electric energy storage units to one another to form a single subassembly. The method may comprise the step of installing said subassembly on the machine body.

Installing the electric energy storage units as a single subassembly improves ease and efficiency of assembly.

The step of securing said electric energy storage units to one another to form a single subassembly, may further comprise a single bracket by which said electric energy storage units are secured to one another.

The use of a single bracket to secure the electric energy storage units to one another minimises the weight of components used whilst enabling installation of the electric energy storage units as a single subassembly.

The method may further comprise the step of securing the charger and the charge port to a panel to form a cartridge. The method may further comprise the step of installing the cartridge on the machine body.

Installation of the charger and the charge port as a single cartridge improves ease and efficiency of assembly.

According to a seventh aspect of the present disclosure, there is provided a working machine. The working machine may have a front and a rear defined by the principal direction of travel. The working machine may define a fore-aft centreline. The working machine may comprise a body mounted on a ground-engaging structure to permit movement of the machine over the ground. The working machine may comprise an operator cab mounted on the body towards a first side of the centreline. The working machine may comprise a single lifting arm. The lifting arm may be pivotably mounted towards an aft end of the body. The lifting arm may be located within a lifting arm housing. The lifting arm housing may comprise first and second sidewalls. The working machine may comprise a valve block. The valve block may be secured to an underside of the machine.

The valve block may comprise electro-hydraulic valves.

The working machine may comprise a mounting cradle for securing said valve block to the machine. The mounting cradle may be secured to the body of the machine.

Positioning of the valve block beneath the machine rather than in a conventional location to the side of a machine opens up space at the side of the machine for other components. Additionally, ease of fitting the valve block to the machine is improved.

The mounting cradle may be substantially U-shaped.

The cab may be mountable to the machine as a unit comprising a floorplate, a roof, an aft wall, a front wall, and first and second sidewalls.

Installation of the cab as a unit improves efficiency of assembly. Advantageously, the machine being electrically powered allows installation of the cab as a unit, as only an electrical connection is required.

According to an eighth aspect of the present disclosure, there is provided a method of installing a valve block on a working machine according to the seventh aspect of the present disclosure. The method may comprise the step of securing the valve block to an underside of the machine. The valve block may be secured to the machine with a mounting cradle.

The mounting cradle may be substantially U-shaped.

The method may further comprise the step of installing a cab comprising a floorplate, a roof, an aft wall, a front wall, and first and second sidewalls on the machine as a unit.

The cab may comprise one or more control devices for controlling the ground engaging structure and/or an operation of the lifting arm.

The method may further comprise the step of connecting said control system to the valve block.

According to a ninth aspect of the present disclosure, there is provided a working machine having a front and a rear defined by the principal direction of travel. The machine may define a fore-aft centreline. The machine may comprise a body mounted on a ground-engaging structure to permit movement of the machine over the ground. The machine may comprise an operator cab mounted on the body towards a first side of the fore-aft centreline. The machine may comprise a single lifting arm pivotably mounted towards an aft end of the body. The machine may comprise a drive assembly for providing power to the ground-engaging structure. The drive assembly may comprise an electric motor and a gear train for transferring power from the first electric motor to the ground-engaging structure. The gear train may extend at least in part beneath the lifting arm. The drive assembly may be mounted to the body at a plurality of drive assembly mounting points. The drive assembly may be configured to be pivotable about at least one of said drive assembly mounting points between a first orientation and a second orientation.

Configuring the drive assembly to be pivotable about at least one of said drive assembly mounting points provides for convenient and reliable installation as the drive assembly can be rotated into its installation position in a controlled manner.

The drive assembly may be fixed in the second orientation during operation of the machine.

The machine may be configured such that the at least one of said drive assembly mounting points about which the drive assembly is configured to pivot is configured to support a weight of the drive assembly when the drive assembly pivots about said at least one of said drive assembly mounting points.

In this way, the weight of the drive assembly may be supported when the drive assembly is fixed in place following pivoting to the second orientation.

The gear train may define a longitudinal axis between an input and an output thereof. The gear train longitudinal axis may be pivotable between a first angle, when the drive assembly is in the first orientation, and a second angle, when the drive assembly is in the second orientation.

The drive assembly may be configured to be pivotable about said drive assembly mounting point such that the gear train longitudinal axis is pivotable through an angle in the range of 30° to 50°.

The drive assembly may be configured to be pivotable about said drive assembly mounting point such that the gear train longitudinal axis is pivotable through an angle of substantially 40°.

The first angle may be within 5° of the vertical. The second angle may be within the range of 35° to 55° of the vertical, optionally within the range of 45° of the vertical.

The drive assembly mounting points may comprise a first, outboard, drive assembly mounting point and a second, inboard, drive assembly mounting point.

The drive assembly may be configured to be pivotable about the second drive assembly mounting point.

The lifting arm may be located within a lifting arm housing. The lifting arm housing may comprise first and second sidewalls. The first sidewall may be outboard of the second sidewall. The drive assembly may be located at least partially between the first and second sidewalls of the lifting arm housing.

The first drive assembly mounting point may be provided on the first sidewall of the lifting arm housing.

This arrangement reduces the need for extra structural reinforcements or more complex housing designs, as the mounting points are kept within the envelope of the lifting arm housing.

The second drive assembly mounting point may be outboard of the second sidewall of the lifting arm housing.

The second drive assembly mounting point may be offset from the second sidewall of the lifting arm housing in an outboard direction.

The machine may comprise an inboard mounting structure.

The second drive assembly mounting point may be provided on the inboard mounting structure.

The inboard mounting structure may include a drive assembly mounting plate. The drive assembly mounting plate may extend from the second sidewall of the lifting arm housing towards the first sidewall of the lifting arm housing.

This arrangement provides ease of accessibility during installation, especially from above, for example in a situation in which the drive assembly is lowered into position using a crane and sling, as is known in the art. The mounting plate provides a clear and open space for securing the assembly at the inboard mounting point without needing to manoeuvre around confined areas or tightly packed components.

The machine may comprise a first bracket fixed to the drive assembly.

The machine may comprise a lug and a pin. The lug may comprise an opening, notch or groove in which the pin is received. One of the lug and the pin may be on the first bracket and the other of the lug and the pin may be on the inboard mounting structure and thereby define the second drive assembly mounting point.

The lug and the pin may be pivotable with respect to one another.

This pin and lug arrangement provides a controlled way to support and stabilise the drive assembly during installation. This is beneficial when positioning the assembly using overhead lifting equipment, as the engagement of the lug and the pin holds the assembly securely in place before the final bolts are inserted and tightened.

The opening, notch or groove may diverge at an open end thereof.

This provides clearance for a feature of the gearbox, such as a bearing housing or shaft, and helps to ensure that rotation is not obstructed by the first bracket.

The first bracket may define the lug. The pin may be supported by the inboard mounting structure.

The inboard mounting structure may comprise a second bracket. The pin may be supported by the second bracket. The second bracket may be mounted on the drive assembly mounting plate.

In the second orientation, the first bracket may be secured to the second bracket at a third mounting point. The first bracket may be secured to the second bracket by a fastener; e.g. a bolt.

The first bracket may comprise a first part and a second part. The first part may include a surface which engages the drive assembly.

The second part may be shaped to conform to the first sidewall of the lifting arm housing at the first drive assembly mounting point.

The first part may at least partially encircle the first electric motor.

This arrangement provides for secure engagement of the electric motor.

The second part may be substantially above the drive assembly when the drive assembly is in the second orientation.

As a result, the second part is easily accessible for installation of the fasteners.

The first bracket may comprise a wear pad configured to protect the first bracket from the lifting arm. The wear pad may be secured to the second part. The wear pad may be of a plastics material, e.g. nylon.

A clearance envelope may be defined between the inboard mounting structure and the first sidewall of the lifting arm housing. The clearance envelope may be configured to accommodate rotation of the first bracket and the drive assembly about the second mounting point, as a unit, between the first orientation and the second orientation.

Accordingly, the drive assembly can be rotated into its operational orientation once positioned in location between the inboard mounting structure and the first sidewall of the lifting arm housing.

According to a tenth aspect of the invention, there is provided a method of installing a drive assembly in a working machine having a front and a rear defined by the principal direction of travel. The machine may define a fore-aft centreline. The working machine may have a body mounted on a ground-engaging structure to permit movement of the machine over the ground. An operator cab may be mounted on the body towards a first side of the fore-aft centreline. A single lifting arm may be pivotably mounted towards an aft end of the body. The machine may comprises a drive assembly for providing power to the ground-engaging structure. The drive assembly may comprise an electric motor and a gear train for transferring power from the first electric motor to the ground-engaging structure. The method may comprise the steps of: a) supporting the drive assembly at a drive assembly mounting point in a first orientation; and b) pivoting the drive assembly about said drive assembly mounting point from the first orientation to a second orientation, where the gear train extends at least in part beneath the lifting arm.

Configuring the drive assembly to be pivotable about at least one of said drive assembly mounting points provides for convenient and reliable installation as the drive assembly can be rotated into its installation position in a controlled manner.

The method may further comprise the step of c) fixing the drive assembly to the body at a further drive assembly mounting point whilst the drive assembly is in the second orientation.

The gear train may define a longitudinal axis between an input and an output thereof. The step b) comprises pivoting the drive assembly about said drive assembly mounting point such that the gear train longitudinal axis is pivoted from a first angle, where the drive assembly is in the first orientation, to a second angle, where the drive assembly is in the second orientation, by an angular displacement.

The angular displacement may be in the range of 30° to 50°; optionally wherein the angular displacement is substantially 40°. The first angle may be within 5° of the vertical. The second angle may be within the range of 35° to 55° of the vertical. The second angle may be within the range of 45° of the vertical.

Such an orientation of the gear train is advantageously compact.

The lifting arm may be located within a lifting arm housing. The lifting arm housing may comprise first and second sidewalls, the first sidewall may be outboard of the second sidewall. The method may comprise the step of securing the drive assembly at least partially between the first and second sidewalls of the lifting arm housing.

The drive assembly mounting point may be provided on one of the first and second sidewalls of the lifting arm housing.

This arrangement reduces the need for extra structural reinforcements or more complex housing designs, as the mounting points are kept within the envelope of the lifting arm housing.

The drive assembly mounting point may be provided on the second sidewall of the lifting arm housing.

The second drive assembly mounting point may be offset from the second sidewall of the lifting arm housing in an outboard direction.

The inboard mounting structure may include a drive assembly mounting plate.

The drive assembly mounting plate may extend from the second sidewall of the lifting arm housing towards the first sidewall of the lifting arm housing.

This arrangement provides ease of accessibility during installation, especially from above, for example in a situation in which the drive assembly is lowered into position using a crane and sling, as is known in the art. The mounting plate provides a clear and open space for securing the assembly at the inboard mounting point without needing to manoeuvre around confined areas or tightly packed components.

A first bracket may be connected to the drive assembly. The first bracket may comprise a first part and a second part. The first part may be fixed to the drive assembly and be pivotably connected to a second bracket at the first drive assembly mounting point.

The second part may have a surface shaped to conform to the first sidewall at the first drive assembly mounting point.

Step b) may bring the surface of the plate into contact with the first sidewall of the lifting arm housing.

Step c) may comprise fixing the second part of the first bracket to the first sidewall of the lifting arm housing at the first drive assembly mounting point.

The method may further comprise the step of d) prior to step a), lowering the drive assembly such that the drive assembly is supported at said drive assembly mounting point in said first orientation. In this way, the method provides for convenient installation using standard equipment, for instance a crane and a sling.

The skilled person will appreciate that except where mutually exclusive, a feature described in relation to any one of the aspects, embodiments or examples described herein may be applied mutatis mutandis to any other aspect, embodiment or example. Furthermore, except where mutually exclusive, any feature described herein may be applied to any aspect and/or combined with any other feature described herein.

### BRIEF DESCRIPTION OF DRAWINGS

Embodiments will now be described by way of example only with reference to the accompanying figures, in which:
Figures 1a to 1e show various views of a material handling machine according to the present disclosure;
Figure 2 is an isometric view of a chassis and cab of the machine according to the present disclosure;
Figure 3 is a plan view of the chassis of the machine according to the present disclosure;
Figure 4 is an underside plan view of the chassis and cab of the machine according to the present disclosure;
Figure 5 is a partial isometric view of a first sidewall of a lifting arm housing with portions of a drive assembly extending therethrough;
Figure 6 is an isometric view of the chassis and cab of the machine according to the present disclosure;
Figure 7 is a rear view of the chassis of the machine according to the present disclosure, with the drive assembly;
Figure 8 is a substantially plan partial view of the chassis of the machine according to the present disclosure, with an electric energy storage unit arrangement;
Figure 9 is an isometric view of the electric energy storage unit arrangement of Figure 8;
Figure 10 is a partial isometric view of a side enclosure of the machine;
Figure 11 is a partial isometric view of a side of the machine with the enclosure removed;
Figure 12 is a further partial isometric view of a side of the machine with the enclosure removed;
Figure 13 is a partial plan view of a hydraulic tank of the machine;
Figure 14 is a partial isometric view of a side of the machine with an inverter cover removed; and
Figure 15 is a partial view of a valve block of the machine;
Figures 16 and 17 are perspective views of a material handling machine according to the disclosure;
Figure 18 is an underside plan view of the material handling machine of Figures 16 and 17;
Figure 19 is a plan view from above of the material handling machine of Figures 16 and 17;
Figure 20 is an isometric view of a drive assembly and chassis of the machine according to the present disclosure;
Figure 21 is an underside plan view of the material handling machine of Figures 16 and 17;
Figure 22 is a front view of the chassis of the machine according to the present disclosure, with the drive assembly;
Figures 23 and 24 are exploded views of a bracket assembly for mounting a drive assembly of the machine according to the present disclosure;
Figure 24A is an enlarged view of a first part of a bracket for mounting a drive assembly of the machine according to the present disclosure;
Figure 25 is an isometric view of a drive assembly and chassis of the machine according to the present disclosure during a first step of installation;
Figure 26 is a front view of the chassis of the machine according to the present disclosure, with the drive assembly during the first step of installation;
Figure 27 is an isometric view of a drive assembly and chassis of the machine according to the present disclosure during a second, later step of installation; and
Figure 28 is a front view of the chassis of the machine according to the present disclosure, with the drive assembly during the second, later step of installation.

### DETAILED DESCRIPTION

In the following detailed description, numerous specific details are set forth in order to provide a thorough understanding of various embodiments and the inventive concept. However, those skilled in the art will understand that: the present invention may be practiced without these specific details or with known equivalents of these specific details; that the present invention is not limited to the described embodiments; and, that the present invention may be practiced in a variety of alternative embodiments. It will also be appreciated that well known methods, procedures, components, and systems may not have been described in detail.

References to vertical and horizontal in the present disclosure should be understood to be in relation to the machine when stood on horizontal ground in a non-working condition. The term axial is generally used in relation to the longitudinal axis of the machine. The term width is generally used in relation to the longitudinal length, that is, transverse to the length.

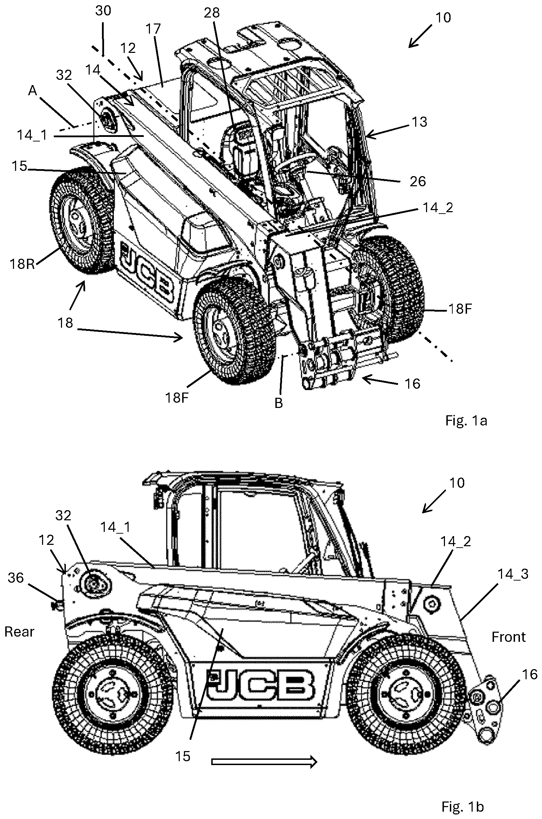

With reference to Figures 1a to 1e there is shown a material handling machine 10 in the form of a telehandler. The telehandler is a compact machine which is trailer towable. As such, the machine 10 may comprise a weight which, when combined with a trailer, is below 3500kg. Generally, this relates to a machine weight which is between 2500kg and 2950kg to allow for a trailer weight of between 550kg and 1000kg. Preferably, the machine will weigh between 2700kg and 2900kg.

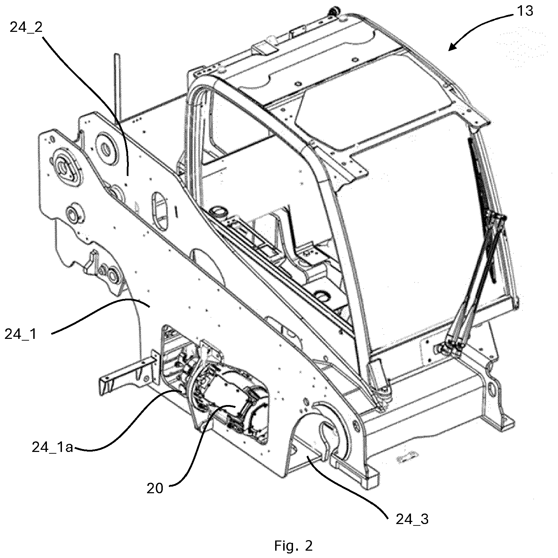

The machine 10 comprises a front 10_1, a rear 10_2, a lifting arm side 10_3 and a cab side 10_4 with a width W and height H. The material handling machine 10 comprises a body 12, an operator cab 13, a lifting arm 14 pivotably mounted at a first end to the body 12 for pivoting movement about a first generally horizontal axis A (which may be referred to as the rear pivot axis A), and a prime mover housing 15, in which a prime mover 20 (Figure 2) is located.

The lifting arm 14 is configured to carry a load via a handling implement (not shown) at a distal second end which opposite to the proximal first end. As such, the second end may comprise a tool carrier 16 (or a carriage) which is configured to attach to or comprises a working implement/work tool to the machine 10. The tool carrier 16 is configured to pivot relative to the lifting arm 14 about a second generally horizontal axis B (which may be referred to as a tilt axis B) so that a load may be kept in a constant horizontal or other chosen orientation as the lifting arm 14 pivots up and down, as well known in the art.

The body 12 is carried by a ground engaging structure 18 configured to provide a tractive effort to propel the machine over ground. The ground engaging structure 18 may form part of a powertrain comprising a prime mover 20 and a drivetrain. In this embodiment the prime mover 20 is an electric motor 20.

The body 12 and ground engaging structure 18 are provided in a fixed relation such that there is no relative movement between them in normal use. That is, in this embodiment, the body 12 is not configured to rotate about a vertical axis, i.e. slew, in relation to the ground engaging structure 18 and the body 12 comprises a rigid or fixed frame which does not articulate as a wheeled loading shovel or other machines might. In alternative embodiments, the body is of some other type.

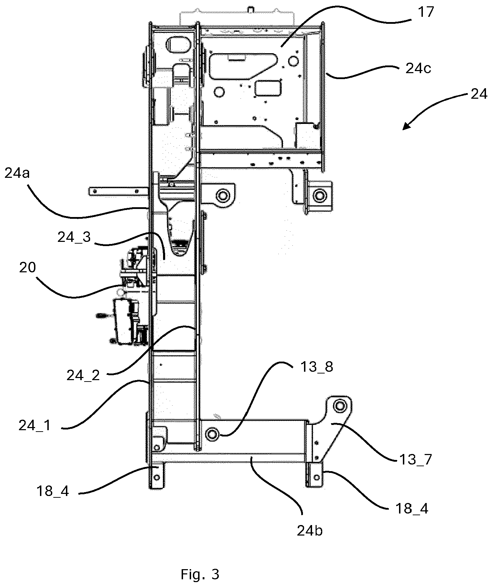

The body 12 may comprise a chassis 24 (seen in plan in Figure 3) which provides the main structural support for the material handling machine 10. The chassis 24 may provide structural support for the ground engaging structure 18, the prime mover 20, the drivetrain, the operator cab 13, the lifting arm 14 and associated actuators, and any ancillary equipment, components, systems or body work as may be required for the machine 10 to function. The chassis 24 may comprise a lifting arm housing having a first or outer sidewall 24_1, a second or inner sidewall 24_2, a base wall 24_3 and a base plate 24_4.

The ground engaging structure 18 of the example shown in the figures comprises a front pair of wheels 18F and a rear pair of wheels 18R as well known in the art. The wheels 18F,18R may be configured to provide two wheel or four-wheel steering as also well known in the art. As such, either or both of the front and rear wheels may be configured to turn relative to the main body under the influence of a steering device provided within the operator cab 13 to effect steering. The steering device may comprise a steering wheel 26, lever or joystick 27, for example.

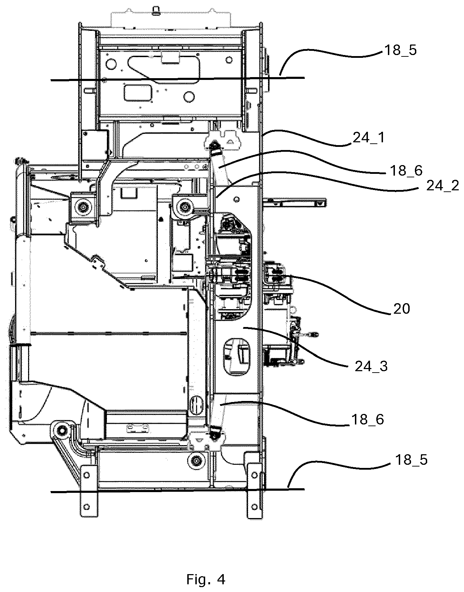

Either or both of the front 18F and rear 18R wheels may be driveably attached to corresponding axles 18_5 (shown schematically in Figure 4) which form part of the transmission/drivetrain of the material handling machine 10. There may be one or two drive shafts 18_6 attached to the axles/wheel assemblies to provide a two wheeled drive or four-wheel drive variants in various embodiments.

The operator cab 13 is mounted to the chassis 24 of the main body 12. The operator cab 13 is principally constructed from: a floorplate 13_1, which may define the underside of the machine 10; a roof 13_2, which may provide the uppermost surface of the machine 10 (when the arm is in a lowered, non-working position); an aft or rear wall 13_3; a front wall 13_4 comprising a windscreen, a first sidewall 13_5 (which may be referred to as an inboard cab sidewall or lifting side cab sidewall), and a second sidewall 13_6 (which may be referred to as an outboard cab sidewall or cab side sidewall).

Internally, there is provided an operator seat 28 and suitable controls for operating the machine 10. Thus, there may be one or more: steering device, such as a steering wheel 26, lever or joystick for example; input devices for operating the lifting arm 14, such as a lever or joystick 27; speed control devices for controlling the movement of the machine over ground, such as one or more foot controls (e.g. accelerator, brake), lever or joystick 27; a throttle control; one or more output devices for providing the operator with information pertaining to the operating state of the machine which may be visual (e.g. a display screen, warning lights) or audible (e.g. buzzer, speaker or other alarm); and, one or more input devices for configuring or operating various other aspects of the machine (e.g. switches, levers, touch screen display, joysticks, touch buttons).

The operator cab 13 may be conventional and be constructed from a glazed frame 13a including a number of structural members having panels or glass extending therebetween. The structural members may comprise corner pillars which extend between the floorplate 13_1 and roof 13_2, the floorplate 13_1, and roof 13_2. A door 13d is provided on the cab side for access.

The operator cab 13 may comprise an external width defined by the laterally outermost parts of the first and second sidewalls 13_5, 13_6. An internal width *Wcab_int* may be defined between the interior surface of the sidewalls 13_5, 13_6 windows or door 13d. The width *Wcab_int* will generally be measured transverse with respect to a longitudinal axis of the machine 10 and at a height which corresponds to the steering wheel 26, joystick 27 or seat 28, for example, where the space requirement for an operator is greatest.

Although not shown, the cab 13 may taper towards the top so as to have a narrower upper width.

The operator cab 13 extends from the cab side 10_4, towards the lifting arm side 10_3 across the fore-aft centreline 30. The cab 13 is laterally offset so as to be positioned predominantly on one side of a longitudinal centreline 30 of the material handling machine 10. The opposing side of the cab 13 may be adjacent (and proximate) to the lifting arm 14 which, in turn, may be located next to or above the prime mover 22. Longitudinally, the cab 13 may be located between front and rear axles and/or the front 18F and rear 18R wheels of the drivetrain. That is, the cab 13 may not extend longitudinally beyond the front and rear axles or wheels 18F, 18R. In some embodiments, the cab may extend over the tyres carried by the wheels 18F or 18R

Relative to their larger counterparts, the size of an operator cab in state of the art compact material handling machines is typically reduced due to the limited width of the machine and the requirement to put the lifting arm towards and or over the centre line to avoid unnecessary structural issues in the chassis. However, in the present disclosure, there is provided a compact material handling machine 10 comprising an operator cab 13 which is wider than the state of the art compact telehandler machines.

In order to provide the wider operator cab 13, the lifting arm 14 of the present disclosure is significantly laterally offset in relation to the centreline 30 of the machine 10 whilst maintaining the overall compact width W and weight of the machine 10. As such, there is provided a compact telehandler with a wider operator cab 13 for increased operator conditions and machine versatility which may be trailer towable.

In alternative embodiments, the lifting arm is substantially centrally located.

It will be appreciated that providing a wider operator cab 13 on a compact machine 10 is generally advantageous as it provides an operator with more internal room. Operators may spend extended periods in the cab 13 and a wider cab provides a greater degree of space in which to move around and operate the machine 10. A larger cab 13 also provides space for additional features which can aid the comfort and operation of the machine 10. For example, the operator cab 13 of the present disclosure may comprise a fixed arm rest 13b adjacent to one or more input devices for controlling the machine, such as the steering wheel 26 or joystick 27. Hence, not only is an operator able to rest their arm in a naturally extended position (rather than being cramped up), but also move their arm to various positions throughout a work shift, as required. Further, a wider cab 13 allows a compact machine to be driven by operators having different sizes and shapes, thereby making the machine generally more versatile.

To describe the compact machine in an alternative way, the present disclosure provides a telehandler comprising a width in a range bounded by the values comprising 1650mm, 1600mm, 1550mm, 1500mm and 1450mm. Hence, for example, the compact telehandler may comprise a width between 1450mm and 1650mm, or between 1550mm and 1600mm. The ratio of the operator cab width (internal or external) to the overall machine width may be greater than 0.45, 0.5, 0.55, 0.6 or 0.65. In the exemplary embodiment, the ratio of the internal width of the operator cab to width of the overall machine is approximately 0.56, with the ratio of the external width of the operator cab 13 to the overall machine being approximately 0.6.

The prime mover 20 may be an electric motor which is side-mounted on the lifting arm side 10_3 of the machine 10. Side mounting of prime movers 20 is known and particularly advantageous for providing improved access for servicing and maintenance. Hence, in the material handling machine 10 of the present disclosure, the operator cab 13 may be positioned predominantly towards the cab side 10_4 of the material handling machine 10 with respect to centreline 30, and the prime mover 20 may be positioned towards an opposing second side of the material handling machine 10. The prime mover 20 may be positioned between the front and rear axles and/or wheels in that it does not extend beyond the front and/or rear axles and/or wheels in a direction parallel to centreline 30. Thus, the prime mover 20 may be longitudinally centrally mounted to one side of the material handling machine 10 and both the cab 13 and prime mover 20 may be arranged side-by-side at a mid-point of the machine 10.

The prime mover 20 may be housed in a prime mover housing 15 which may include an access panel which is opened, e.g. via a hinged connection, or removed to provide access to the prime mover 20 for maintenance and servicing purposes, as well known in the art.

The lifting arm 14 (which may be referred to as a boom) may be provided by an elongate box section having a length which extends fore-aft on the machine 10, a transverse width 14w, and a vertical depth. The lifting arm 14 may comprise a telescopic boom having a plurality of nested sections which are configured to expand telescopically to adjust the length thereof upon demand. Thus, there is shown a first section 14_1 connected to a pivoting mount 32 and a second section 14_2 which is telescopically mounted within the first section 14_1. The second section 14_2 of the lifting arm 14 is longitudinally moveable with respect to the first section 14_1 such that the lifting arm 14 can be extended and retracted on demand from the operator cab 13 controls.

In order to accommodate the larger cab, the telescopic boom of the lifting arm 14 is positioned entirely on one side of the fore-aft centreline 30. In some embodiments, the centre 14c of the lifting arm 14 may be between 0.65W and 0.75W from the cab side 10_4 where W is the width of the machine 10. In some embodiments, the lifting arm may have a width 14w between 175mm and 225mm.

The distal end of the lifting arm 14 extends from the pivot mount 32 which is located generally above the rear wheel 18R and aft of the cab 13 to the front of the machine 10. The tool carrier 16 is the foremost part of the machine, when no work implement is attached. The first section 14_1 comprises a straight section which is inclined slightly downwards from the pivot mount 32 for transportation and, when not in use, extends fore of the cab 13 to terminate above the front wheel 18F. The second section 14_2 extends colinearly from within the first section with a drop section 14_3 which is angled downwards with respect to the main boom so as to put the tool carrier 16 proximate the ground.

Telescopic movement of first and second section 14_1, 14_2 may be achieved by use of an extension actuator in the form of a hydraulic cylinder (not shown) housed within the lifting arm 14. The extension actuator may be any known in the art, such as a double acting hydraulic linear actuator. In some embodiments, extension may be achieved by use of an electric linear actuator, a telescopic extension ram, multiple extension rams, and/or a chain and pulley system which are also known in the art.

One end of the extension actuator may be coupled to the first section 14_1 with a second end coupled to the second section 14_2 such that extension and retraction of the extension actuator causes a corresponding movement in the lifting arm 14. As will be appreciated, the lifting arm 14 may include two, three, four or more sections.

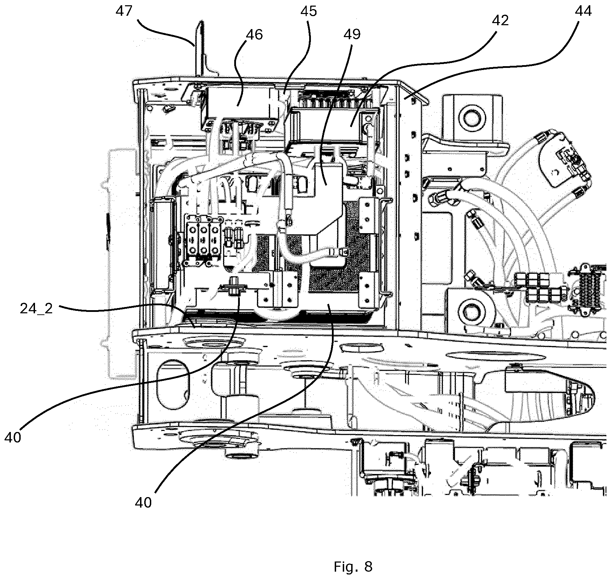

The lifting arm 14 can be rotated about the lifting axis defined by the pivot mount 32 and axis A of the machine 10 to lift and lower loads. Rotational movement of the lifting arm 14 with respect to the machine body 12 may be achieved using a lift actuator 14_4 (shown in plan in Figure 8) which is operable to manipulate the arm 14 in a vertical plane. The lift actuator 14_4 may be any suitable type but is typically a hydraulic cylinder, as shown, coupled at a first end 14_4a to the underside of the first section 14_1 and to the chassis at the second end 14_4b. The lift actuator 14_4 may be a double acting hydraulic linear actuator, but could be single acting cylinder. There may be multiple lift actuators 14_4.

As described further below, the lift actuator 14_4 is located within the lifting arm housing and extends in an aft-fore direction. The first end 14_4a, which is the cylinder end in the described embodiment, is attached to the chassis aft of the base wall 24_3 towards a rear of the machine 10, with the second end 14_4b, the rod end, is attached to the underside of the boom at a mid-portion between the proximal and distal ends. As will be described further below, when in a non-working position and lower extensions, the lift actuator 14_4 may extend through the base wall 14_3.

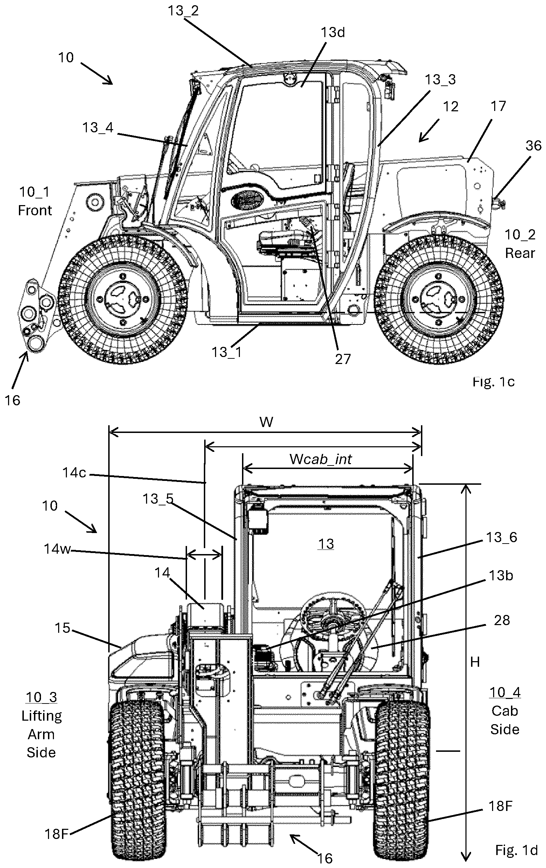

With reference to Figure 1d, the compact material handling machine 10 of the present disclosure comprises width W. The width W may be defined by the lateral extremities or outermost edges of the machine body 12 and/or wheels and/or tyres when viewed from the front or back of the machine 10. In some instances it may be more convenient to define the width of the machine as the sidewall of the cab 13 on one side and the prime mover housing 15 on the other. As such, the width W may be deemed to be defined by the maximum lateral separation between the prime mover housing 15 and the exterior cab side sidewall 13_6 of the operator cab 16, the wheel guards or wheels 18F, 18R. As can be seen, the location of the outer edges of the tyres may correspond to the outer edges of the main body 12 such that the outer edges of the wheels and main body are substantially flush.

In some embodiments, the material handling machine 10 may comprise one or more steps to aid operator ingress and egress from the cab 13. These steps may project from the main body 12 but may not be incorporated into the overall width of the main body 12 per se. As such, the width W may be determined from the lateral extremities of the main body work, e.g. one or more external panels, or chassis as viewable from the exterior of the machine rather than one or more ancillary features which project from the main body 12. Other projecting features which do not define the width of the machine per se may comprise a wing mirror or a door hinge or the like.

The width W may be between 1450mm and 1700mm, optionally between 1500mm and 1600mm, 1530mm and 1570mm or 1545mm and 1560mm.

As noted, the material handling machine of the present disclosure may be towable on a trailer on highway. Legislation in the UK, Europe and elsewhere sets a combined towing weight limit of 3500kg. In the case of a compact material handling machine, this effectively sets a practical weight limit to around 2900kg, which allows a weight of 600kg for the trailer, although some trailers are lighter. The trailer may be defined by the inclusion of suitable conventional inertial or overrun brakes which are independently operable in response to the braking of the towing vehicle and may also be defined by the inclusion of a breakaway cable configured to apply the brakes in the event of a detachment from the towing vehicle. The trailer may comprise a conventional ball hitch for use by a domestic or light commercial vehicle and would typically be twin axle.

The material handling machine 10 of the present disclosure may comprise a weight of between 2500kg and 2950kg. In preferred embodiments, the weight may be between 2600kg and 2800kg or between 2650kg and 2750kg, or approximately 2700kg. The weight of the material handling machine may exclude a lifting implement attached to the lifting arm. Where the lifting implement is attached, the preferred weight may be between 2700kg and 2900kg. The weight may be taken to have an ordinary meaning and represent the unladen weight of the machine and without the operator. The weight may be referred to as a "wet weight" or "kerbside weight".

Turning to Figure 2, there is shown the chassis and cab of the material handling machine 10 of Figures 1a-1e. There can be seen the operator cab 13, chassis 24 with lifting arm housing, and the prime mover 20 located between the front 18F and rear 18R wheels.

Figure 3 shows a plan view from above, and Figure 4 shows a plan view from below, of the material handling machine 10 in which the lifting arm 14 and prime mover housing have been omitted to reveal the underlying structure of the chassis 24. The prime mover 20 can be clearly seen with the prime mover 20 extending partially through an outer wall 24_1 of the chassis 24.

The chassis 24 comprises a main body portion 24a which extends longitudinally aft-fore, a front transverse section 24b and a rear transverse section 24c. The main body portion 24a provides the main structural support for the machine 10 and a lifting arm housing in which the lifting arm 14 is partially stowed when in a retracted lowermost position. The main body part 24a also houses part of the lift actuator 14_4.

The main body portion 24a comprises an outer wall 24_1, an inner wall 24_2, a base wall 24_3 and a base plate 24_4 (or deck plates, as the base wall and the base plate may be referred to), which extends therebetween.

The inner 24_2 and outer 24_1 sidewalls are provided by plates which extend parallel to one another and the longitudinal axis and lie in vertical planes. The sidewalls 24_1, 24_2 provide a partial housing for the first section of the lifting arm 14 when in a lowermost non-working position and support for the pivot mount 32. The inner 24_1 and outer 24_2 sidewalls are separated by a dimension which is comparable to the width 14w of the lifting arm such that the lifting arm 14 may be received with a suitable clearance. The inner 24_2 and outer 24_1 walls connect to the rear transverse section 24c at the rear and to the front transverse section 24b at the front of the machine 10.

The base wall 24_3 extends laterally between the outer wall 24_1 and the inner wall 24_2 and longitudinally along the length of the chassis 24 to provide structural support and torsional stiffness between the sidewalls 24_1, 24_2 and to the chassis more generally and aids the offset of the lifting arm required to accommodate the wider cab 13.

The base plate 24_4 extends laterally between the outer wall 24_1 and the inner wall 24_2 and longitudinally along the length of the chassis 24 to provide structural support and torsional stiffness between the sidewalls 24_1, 24_2 and to the chassis more generally and aids the offset of the lifting arm required to accommodate the wider cab 13.

As shown in Figure 3, this embodiment of the present disclosure comprises a base wall 24_3 which extends between the lifting arm housing outer wall 24_1 and lifting arm housing inner wall 24_2. The base wall 24_3 may comprise a plate-like member which spans laterally between the outer and inner walls 24_1, 24_2, and longitudinally across the aperture 24_1a so as to connect the opposing ends thereof.

The base wall 24_3 may extend across the aperture 24_1a mid-height of the chassis outer wall 24_1 and aperture 24_1a and comprise one or more cut-outs to receive the parts of the prime mover 20 which extend through the aperture 24_1a into the lifting arm housing. As with the aperture 24_1a, the cut-outs may be located to allow specific components to be received within the lifting arm housing between the outer and inner walls 24_1, 24_2. Advantageously, the base wall 24_3 requires less material to be removed in order to accommodate the drive assembly unit of this embodiment than is required to be removed for some alternative prime mover, thus improving structural performance.

The base wall 24_3 extends longitudinally from aft of the aperture 24_1a to the front of the chassis 24 where it joins with the front transverse section 24b. The base wall 24_3 comprises a plurality elevations with differing heights to aid structural rigidity.

The base wall 24_3 may be attached to the outer and inner walls 24_1, 24_2 by any suitable mechanical method, preferably welding. The base wall 24_3 may be attached along all of the contacting edges.

As shown in Figure 4, this embodiment of the present disclosure comprises a base plate 24_4 which extends between the lifting arm housing outer wall 24_1 and lifting arm housing inner wall 24_2. The base plate 24_4 may comprise a plate-like member which spans laterally between the outer and inner walls 24_1, 24_2, and longitudinally across the aperture 24_1a so as to connect the opposing ends thereof.

The base plate 24_4 may extend across the aperture 24_1a proximal a lower edge of the chassis outer wall 24_1 and aperture 24_1a and comprise one or more cut-outs to receive the parts of the prime mover 20 which extend through the aperture 24_1a into the lifting arm housing.

In addition to the base wall 24_3 and the base plate 24_4, the first 24_1 and second 24_2 sidewalls may be connected by a plurality of connecting portions provided by the front 24a and rear 24c transverse sections and separate struts and box sections.

The front transverse section 24_b extends laterally from the main body portion 24a and provides support for the front axle 18_5, front wheel assemblies 18_1, 18_10 and front portions of the operator cab 13. As such, there can be seen two fore cab mounts 13_7, 13_8 for the operator cab 13 and mounting points 18_4 for the wheel assembly.

The rear transverse section 24c extends laterally from the main body portion 24a and provides a location 17 for ancillary services and associated equipment at a convenient location for an operator or maintenance person to access, as discussed in further detail below. The exterior or the rear transverse section may provide the external surface of the material handling machine or may comprise one or more external panels or cladding to provide the exterior surface. The rear housing may comprise one or more doors, e.g. a hood or boot lid, which to enclose the interior of the rear housing whilst providing convenient access.

The compact telehandler 10 of the present disclosure provides a laterally offset lifting arm 14 which is located in a lifting arm housing comprising opposing parallel walls 24_1, 24_2 of the chassis 24. In order to accommodate the larger than conventional cab 13, it is desirable to position the outer wall 24_1 laterally as far towards the lifting arm side wheels as possible. In order to maximise this, the outer wall 24_1 may longitudinally overlap with wheel assembly either at the front or the rear of the machine. Thus, the line of the outer wall may dissect the wheel assembly.

With reference to Figures 1a to e, the second distal end of the lifting arm 14 comprises the tool carrier 16 (which may be referred to as a tool carrier) to which a lifting implement may be mounted. The tool carrier 16 may be configured to carry a load of at least 1.3 tonnes, optionally 1.4 tonnes. The lifting implement may be any which finds useful employment with the material handling machine 10 and will typically include a shovel, forks, a grab, or a grapple, etc.

In order to provide sufficient space for a wider operator cab 13 with a side mounted prime mover 20, it is necessary for parts of the prime mover 20 to extend into the chassis 24 and under the lifting arm 14. Hence, as can be seen best in Figure 2, the outer wall 24_1 of the chassis main body portion 24a comprises a large aperture 24_1a through which portions of the prime mover 20 extend. As such, the prime mover 20 may be moved towards the centreline 30 of the machine 10.

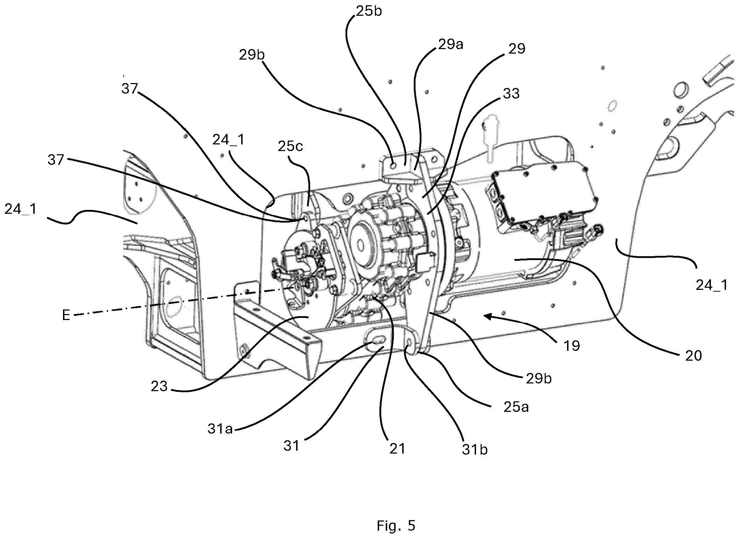

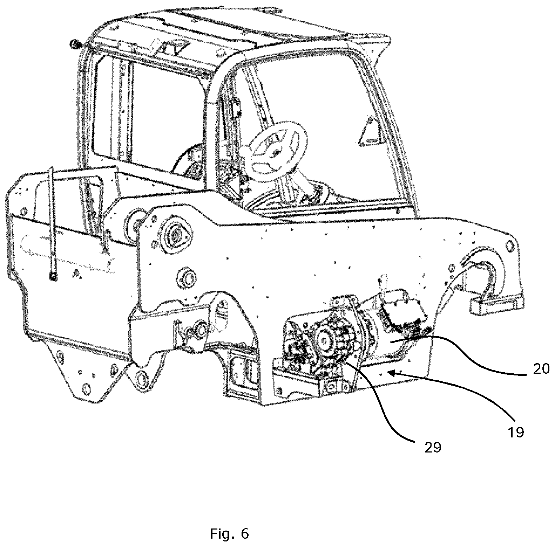

In this embodiment, as shown in Figures 5 and 6, the machine 10 has a drive assembly unit 19 which includes the prime mover 20, in this embodiment the electric motor 20. The drive assembly unit 19 further includes a "dropbox" or gear train 21 by which power is transferred from the electric motor 20 to the ground engaging structure 18. In this embodiment, the gear train 21 is a reduction gear train. In alternative embodiments, the gear train is some other suitable type of gear train. Power is transferred via the gear train 21 to the drive shaft or shafts 18_6. In this embodiment, there are two drive shafts 18_6, such that power is transferred from the electric motor 20 to drive both fore and aft axles 18_5. The gear train 21 includes a series of at least two gears having parallel axes of rotation with respect to one another, and with respect to the drive shaft(s) 18_5.

Using a single electric motor 20 to drive both fore and aft axles 18_5 advantageously minimises the number of components required, so minimising complexity, e.g. of software as well as components, and expense and enabling the machine 10 to be compact.

The drive assembly unit 19 also includes a brake assembly 23 mounted to the gear train 21. In this embodiment, the brake assembly is a disc brake assembly 23. In alternative embodiments, the brake assembly is a drum brake assembly. The brake assembly 23 defines a longitudinal axis E, e.g. an axis of rotation of a brake disc (not shown). The brake assembly longitudinal axis E is co-axial with an axis of rotation E of the gear train output.

The electric motor 20 is positioned towards the second side of the material handling machine 10, i.e. opposite the cab side of the centreline. In this embodiment, the electric motor 20 is wholly positioned to the second side of the centreline, i.e. such that the entirety of the electric motor is to the second side of the centreline. In alternative embodiments, the majority of the electric motor is positioned to the second side of the centreline.

In this embodiment, the electric motor 20 extends through the aperture 24-1a, together with the gear train 21. Advantageously, the drive assembly unit 19 extending through the aperture 24-1a enables the machine to be compact, yet to have a larger cab, as described above.

The drive assembly unit 19 is in this embodiment assembled as a single unit prior to installation on the machine 10. During installation, the drive assembly unit is mounted to the chassis 24 as a unit. As shown in Figure 5, the drive assembly unit 19 is mounted to the chassis 24 at three mounting points 25a, 25b, 25c. In alternative embodiments, the drive assembly unit is mounted to the chassis at fewer than three or more than three mounting points.

The drive assembly unit 19 is in this embodiment mounted to the first and second sidewalls 24_1, 24_2. The first mounting point 25a is at an outboard side of the first sidewall 24_1. The second mounting point 25b is at an outboard side of the first sidewall 24_1. In this embodiment, the aperture 24_1a is fully enclosed by the first sidewall 24_1a. The first mounting point 25a is positioned below the aperture 24_1a through which the drive assembly unit 19 extends. The second mounting point 25b is located above the aperture 24_1a.

In this embodiment, the drive assembly unit 19 includes a bracket 29 to which the electric motor 20 and the gear train 21 are secured. The bracket 29 includes in this embodiment a body in the form of an elongate plate 33 oriented substantially vertically in relation to the machine 10.

The bracket 29 has a first end 29a by which the bracket is secured to the first mounting point 25a. In this embodiment, the bracket first end 29a includes an L-shaped bracket 31 pivotably secured to the body 33 at a pivot point 31b, e.g. by a suitable fastener. The bracket 31 defines an aperture 31a for securing the bracket 31 and thus the bracket 29 to the first sidewall 24_1. In this embodiment, the aperture 31a is a slot, to allow for tolerance.

The bracket 29 has a second end 29b which defines apertures 29b by which the bracket second end 29b is secured to the first sidewall 24_1 at the second mounting point 25b. The second mounting point 25b includes apertures defined by the first sidewall 24_1 that correspond to the apertures 29b. Fasteners (not shown) are used to secure the bracket first end 29a to the first sidewall 24_1.

In this embodiment, the chassis 24 includes a bracket secured to the second sidewall 24_2 and extending perpendicularly therefrom to provide the third mounting point 25c. The drive assembly unit 19 includes a corresponding bracket 37 for securing to the third mounting point bracket 25c. Both brackets define corresponding apertures through which a fastener (not shown) extends to secure the drive assembly unit 19 at the third mounting point 25c. In this embodiment, one or both apertures 37a are in the form of slots in order to allow for tolerance.

Shared mounting points and brackets are used where possible in order to minimise weight and reduce the number of components.

Upon installation of the drive assembly unit 19 on the machine 10, the drive assembly unit 19 is lowered, e.g. using a crane and sling, into position in an orientation such that a longitudinal axis D (see Figure 6) of the gear train 21 is at a first angle. In this embodiment, the first angle is substantially zero, i.e. the axis D is substantially horizontal in relation to the machine body. In an alternative embodiment, the first angle is some other suitable angle for installation of the drive assembly unit. The drive assembly unit 19 is positioned such that the bracket 31 can be secured to the sidewall 24_1 at the first mounting point 25a.

The drive assembly unit 19 is then pivoted about the pivot point 31b until the axis D is at a second angle x, where the second end 29b of the bracket 29 is in contact with the first sidewall 24_1 at the second mounting point 25b. In this embodiment, the second angle x is 40° to the horizontal in relation to the machine body. In alternative embodiments, the second angle is some other suitable angle, e.g. in the range 30° to 50°.

The second end 29b is secured to the first sidewall 24_1 at the second mounting point 25b. The bracket 37 is then secured to at the second sidewall 24_2 at the third mounting point 25c. Alternatively, the drive assembly 19 is mounted to the third mounting point and then to the second mounting point. Alternatively, the first, pivotable, mounting point is above the aperture 24_1a, i.e. the drive assembly is initially mounted to a point above the aperture 24_1a before pivoting takes place.

Advantageously, the drive assembly unit 19 being pivotable about the first mounting point 25a allows installation of the drive assembly unit 19 into a compact space. The drive assembly unit 19 is pivoted into a position where the longitudinal axis D is suitable oriented without the need for expensive manipulating equipment.

In this embodiment, substantially 40% of the first electric motor 20 extends to the cab side of the first sidewall 24_1. In alternative embodiments, 30% to 50% of the first electric motor extends to the cab side of the first sidewall 24_1. In alternative embodiments, 20% to 60% of the first electric motor extends to the cab side of the first sidewall 24_1.

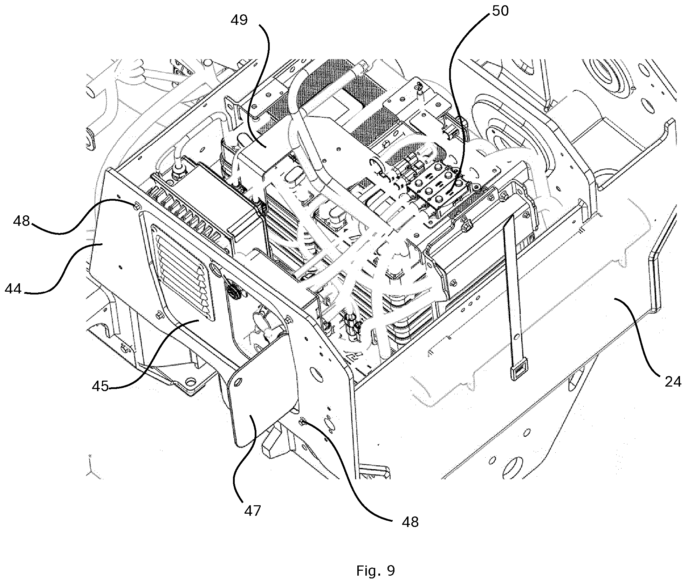

With reference to Figures 8 and 9, the machine 10 of this embodiment includes at least 1 high voltage electric energy storage unit 40 positioned aft of the cab 13. Advantageously, the or each electric energy storage unit 40 provides a counterbalance to the lifting arm when located in this position. In a diesel-powered machine, the engine is typically mounted aft of the cab, and so provides a counterbalance to the lifting arm. In an electrically-powered machine 10 such as that of this embodiment, i.e. in the absence of a diesel engine, positioning the electric energy storage units 40 in this location provides a suitable weight replacement for the diesel engine, and limits the amount of redesign required.

In this embodiment, the machine 10 has four electric energy storage units 40. In this embodiment, the electric energy storage units 40 are located in pairs, with two upper electric energy storage units 40 positioned over two lower electric energy storage units 40. In alternative embodiments, there are more or fewer that 4 electric energy storage units 40. As shown in Figure 9, the electric energy storage units 40 are electrically connected to the machine 10 via connectors 50.

The electric energy storage units 40 of this embodiment provide 20kW of power. In alternative embodiments, alternative electric energy storage units are used. In alternative embodiments, the machine comprises substantially vertically orientated electric energy storage units. In such embodiments, the electric energy storage units comprise connectors at an upper end thereof. Advantageously, such an arrangement improves ease of connection. In alternative embodiments, the electric energy storage units are arranged in an alternative suitable position with respect to one another, e.g. side by side.

In this embodiment, the upper and lower electric energy storage units 40 are laterally offset from one another rather than aligned. Advantageously, access is thus provided to the lower pair of electric energy storage units 40 such that connection of the electric energy storage units 40 can more easily take place following installation.

The electric energy storage units 40 are in this embodiment housed in an enclosure 44 aft of the cab 13. In this embodiment, the enclosure 44, and so the electric energy storage units 40, are located to the cab side of the lifting arm housing with respect to the machine centreline. Advantageously, the enclosure 44 does not extend the full width of the machine 10, rather being entirely to the cab side of the lifting arm housing 24_1, 24_2. That is, the enclosure 44 is laterally adjacent to the lifting arm housing sidewall 24_2. The machine 10 is thus advantageously compact.

In this embodiment, the enclosure 44 is inboard of the aft-most point of the machine 10. The enclosure 44, and therefore the electric energy storage units 40, are thus protected from damage. In this embodiment, the pivoting mount 32 is substantially aligned with the enclosure 44, such that the lifting arm 14 extends beyond the enclosure 44 in a rearwards direction. Advantageously, such an arrangement makes the machine 10 more compact.

In this embodiment, the electric energy storage units 40 are secured to one another prior to installation on the machine 10 to form a subassembly. A bracket 49 is used to secure the electric energy storage units 40 with respect to one another. Installation and replacement of the electric energy storage units 40 is thus more efficient.

Also contained in the enclosure 44 is an electric energy storage unit charger 42 and charge port 46. The charge port 46 is externally accessible by a door 47. The charger 42 and the charge port 46 are installed in the enclosure 44 as a subassembly. The charger 42 and the charge port 44 are secured to a panel 45. Advantageously, the panel 45 is secured to the enclosure 44 in a space envelope also used by diesel versions of the machine 10, i.e. significant adaptation is not required. The panel 45 is secured to the enclosure 44 by fasteners 48.

In this embodiment, the charge port 46 is accessible from the same side of the machine 10 as the cab door 13d. Advantageously, it is thus easy for an operator to access the charge point 46.

As shown in Figures 8 and 9, the charge port 46 is inboard of an outer side of the machine 10. The charge port 46 is thus advantageously protected from damage.

Upon installation, the electric energy storage units 40 are lowered into the enclosure 44 as a subassembly. The electric energy storage units 40 are then connected as required. The charger 42 and charge port 46 subassembly is then installed in the enclosure 44, and connected as required. A top panel (not shown) is then sealed over the enclosure 44, to prevent water ingress.

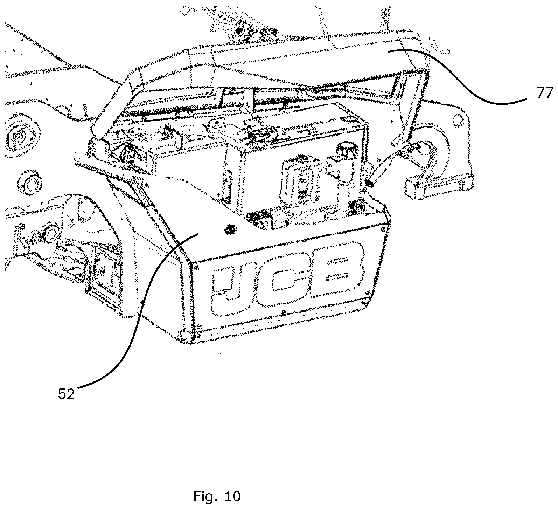

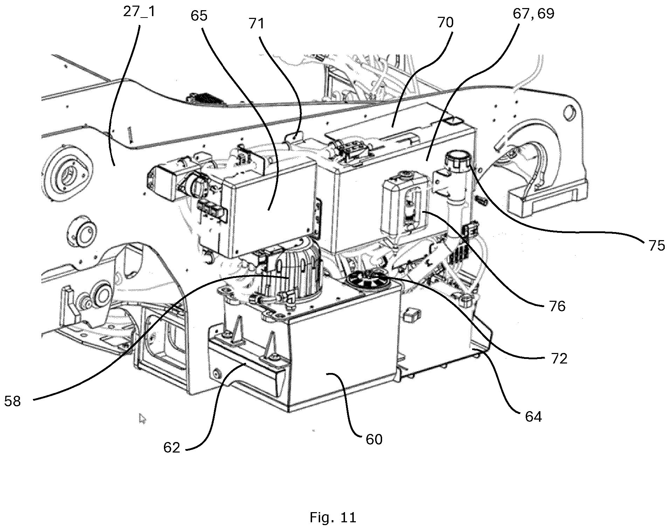

With reference to Figures 10 and 11, the machine 10 includes a side enclosure 52 in which components are housed. The side enclosure 52 is adjacent the first sidewall 24_1. The drive assembly 19 is partly located within the side enclosure 52, and partly extends through the first sidewall 24_1 beneath the lifting arm 14.

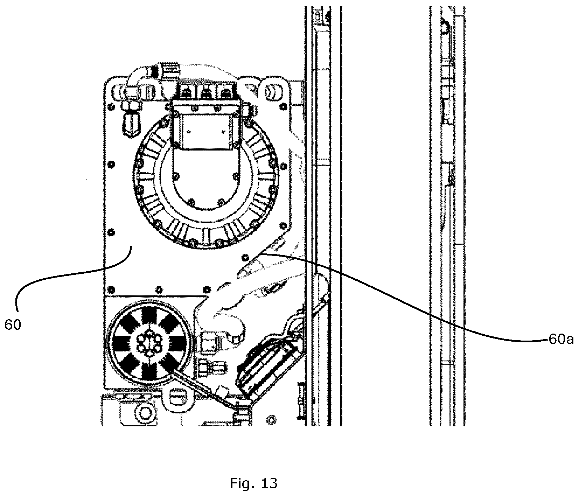

The machine 10 includes, housed within the side enclosure 52, a hydraulic pump 56 for actuation of the lifting arm 14 and a second electric motor 58 for actuation of the hydraulic pump 56. In this embodiment, the second motor 58 is a permanent magnet motor. The hydraulic pump 56 is mounted to a hydraulic tank 60 and is in this embodiment at least partially submerged therein. The hydraulic tank 60 is secured to the first sidewall 24_1 by means of a bracket 62. As shown in Figure 13, the hydraulic tank 60 is shaped to fit within a space envelope defined by the remaining components housed within the side enclosure 52, including the first electric motor 20. The hydraulic tank 60 has a facet 60a at an angle of substantially 45° to the adjoining faces of the tank, in order to fit around the electric motor 58.

The second motor 58 is supported on the hydraulic tank 60. The hydraulic tank 60 includes a filter 72. In this embodiment, the hydraulic tank 60 is supported on resilient bushes, e.g. rubber bushes.

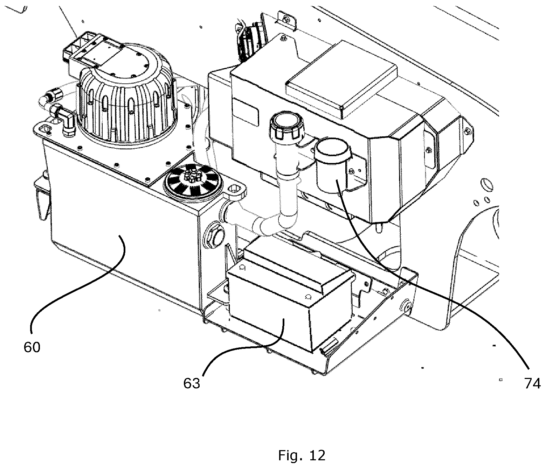

Also housed within the side enclosure is an auxiliary 12V electric energy storage unit 63 (see Figure 12), for providing power to auxiliary systems such as lights. The 12V electric energy storage unit 63 is supported on a bracket 64 that is secured to the first sidewall 24_1. The bracket 64 includes a mounting point for the hydraulic tank 60. Advantageously, sharing of brackets to mount components reduces the number of brackets and similar mountings required, minimising weight and improving compactness of the machine 10. A power distribution unit 65 is housed within the side enclosure 52. An isolator is housed within the side enclosure.

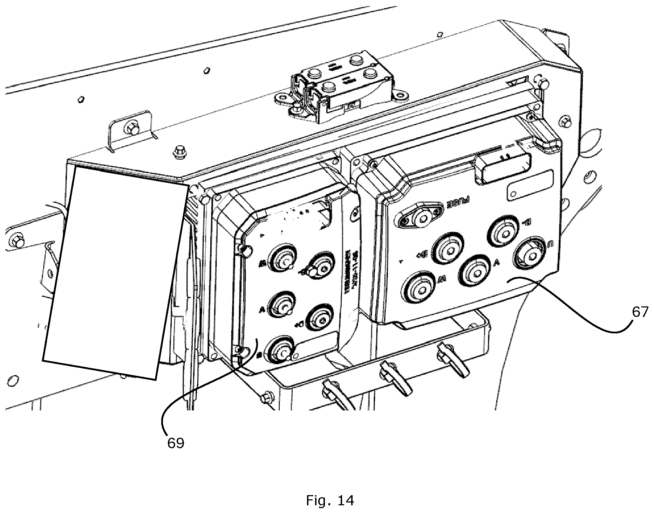

As shown in Figure 14, the machine 10 includes a first inverter 67 associated with the first electric motor 20 and a second inverter 69 associated with the second electric motor 56. The inverters 67, 69 are housed within the side enclosure 52. The inverters 67, 69 are secured to the first sidewall 24_1 by means of a cover 70 and a bracket 71.

Also mounted within the side enclosure 52 are service points for brake fluid 74 (see Figure 12), hydraulic fluid 75, and washer fluid 76. Advantageously, mounting such service points in the side enclosure 52 provides easy access for maintenance. Location of the isolator in the side enclosure improves ease of access and maintenance.

The machine 10 includes a cover 77 for the side enclosure 52. The cover 77 is shown in an open position in Figure 10. The cover 77 is hingedly secured to the first sidewall 24_1, and is configured to be openable in order to provide access to the side enclosure 52, e.g. for servicing.

The machine 10 further includes a valve block 80. The valve block includes electro-hydraulic valves 82 for controlling hydraulic flow. The valve block 80 is located on an underside of the machine 10. The valve block 80 is secured to the underside of the machine 10 by a mounting cradle or bracket 84, i.e. the valve block 80 is secured to the underside of the chassis. Advantageously, location of the valve block 80 beneath the machine 10 makes the machine 10 makes the machine compact.

In this embodiment, the bracket 84 is substantially U-shaped, having a first arm 84a and a second arm 84b extending parallel to vertical plates of the chassis for attachment thereto, e.g. by fasteners. A central portion 84c of the bracket 84 supports the valve block 80. The bracket 84 of this embodiment defines cut-outs 84c, to reduce weight whilst providing the required structural strength.

Advantageously, due to only electrical connections being required between the cab controls and the valve block 80, the cab 13 is in this embodiment supplied fully assembled. That is, the cab is mounted to the chassis as a unit including the floorplate 13_1, , the roof 13_2, the aft or rear wall 13_3, the front wall 13_4, and the first and second sidewalls 13_5.

Advantageously, much of the machine body 12 of this embodiment is similar to that of a known diesel-powered machine, keeping redesign and assembly costs to a minimum.

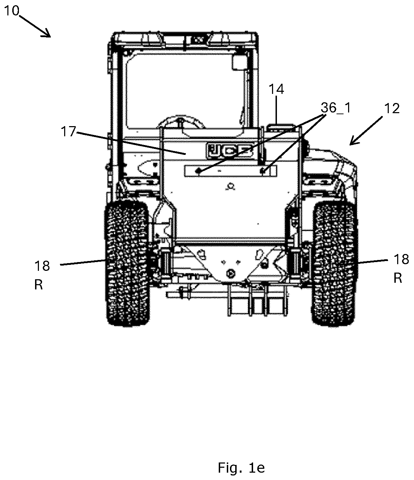

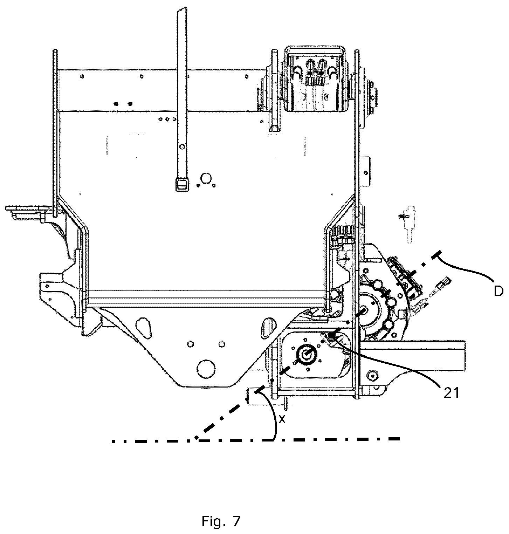

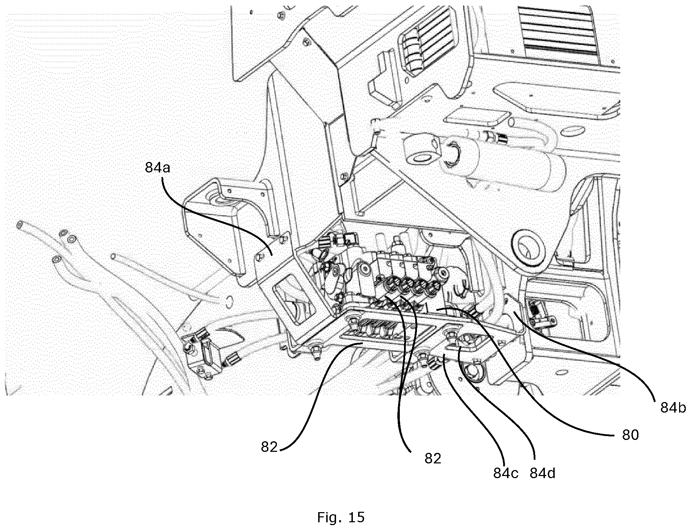

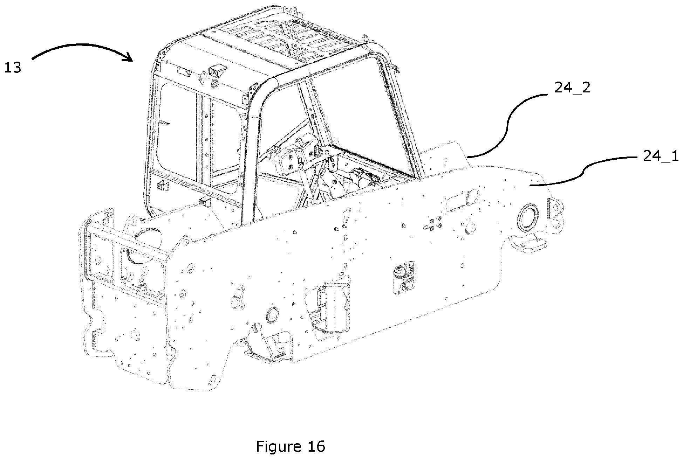

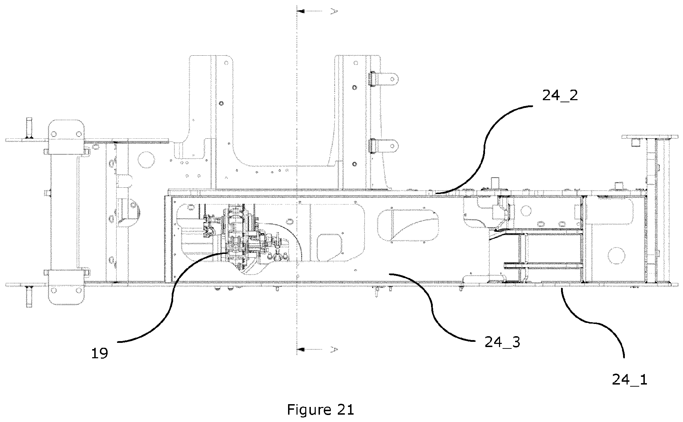

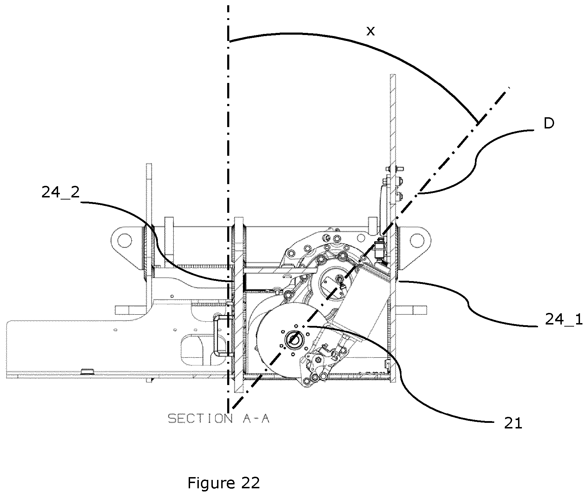

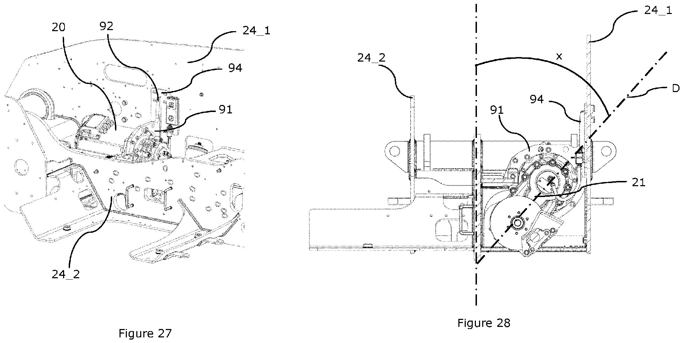

With reference to Figures 16 to 28, another material handling machine 10' has an alternative drive assembly unit 19 arrangement. The material handling machine 10' of Figures 16 to 28 is also a compact telehandler and is substantially similar to the material handling machine 10 of Figures 1 to 15 except as described below. Consequently, in the description of this embodiment, like reference numerals are assigned to elements having corresponding functions, and for simplicity, a detailed description of those elements which do not differ from the material handling machine 10 of Figures 1 to 15 will be omitted.

As with the telehandler of Figures 1 to 15, in order to provide sufficient space for a wider operator cab 13, the prime mover 20 is mounted such that parts thereof extend into the chassis 24 and under the lifting arm 14. The material handling machine 10' of Figures 16 to 28 differs, however, in that the prime mover 20 does not extend through the outer wall 24_1 of the chassis main body portion 24a.

In alternative embodiments, the lifting arm housing does not include sidewalls, or includes a single sidewall. In such embodiments, the mounting points described below are provided on some other suitable part of the machine body.

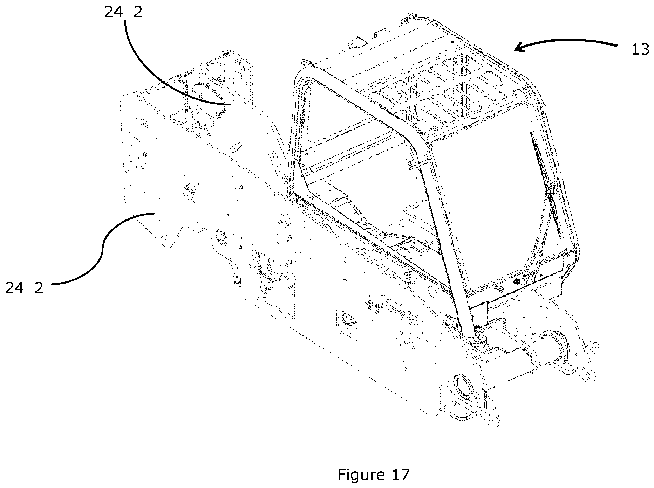

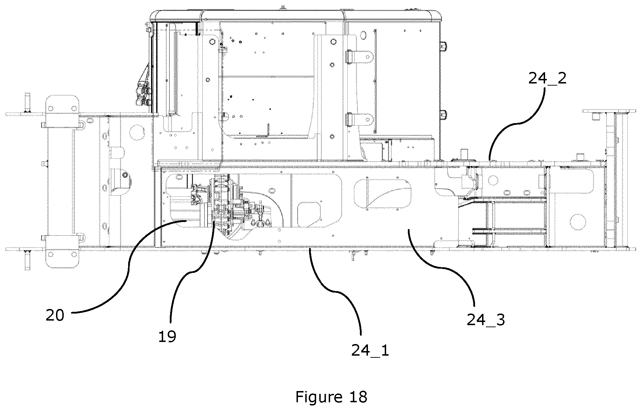

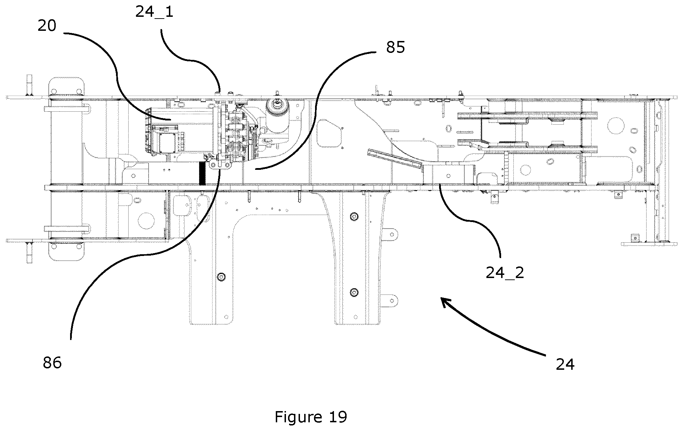

Turning to Figures 16 and 17, there is shown the chassis and cab of the material handling machine 10'. Figure 18 shows a plan view from below, and Figure 19 shows a plan view from above, of the material handling machine 10 in which the lifting arm 14 has been removed to reveal the underlying structure of the chassis 24. The drive assembly unit 19 can be seen located between the outer wall 24_1 and inner wall 24_2. As with the material handling machine 10, the drive assembly unit 19 includes the prime mover 20, which, in this case, is an electric motor.

The drive assembly unit 19 is positioned towards the second side of the material handling machine 10', i.e. opposite the cab side of the centreline. In this embodiment, the drive assembly unit 19 is wholly positioned to the second side of the centreline, i.e. such that the entirety of the drive assembly unit 19 is to the second side of the centreline. In alternative embodiments, the majority of the drive assembly unit 19 is positioned to the second side of the centreline. In this embodiment, the drive assembly unit 19 is entirely contained between the outer wall 24_1 and inner wall 24_2 in the lateral direction. However, other embodiments of the material handling machine 10', the electric motor 20 and gear train 21 may instead extend through an aperture in the outer wall 24_1, similar to the arrangement in the material handling machine 10 of Figures 1 to 15.

The drive assembly unit 19 is assembled as a single unit prior to installation on the machine 10. During installation, the drive assembly unit is mounted to the chassis 24 as a unit.

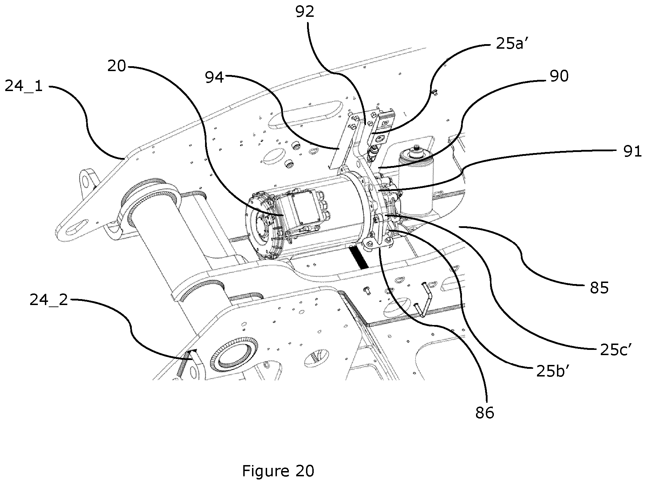

As shown in Figure 20, the drive assembly unit 19 is in this embodiment mounted to the body at three mounting points 25a', 25b' and 25c'. The first mounting point 25a' is at an inboard side of the first sidewall 24_1. The second and third mounting points 25b' and 25c' are outboard of, and spaced from, the second sidewall 24_2 of the lifting arm housing. Specifically, the second and third mounting points 25b' and 25c' are provided on an inboard mounting structure comprising a mounting plate 85 and a mounting bracket 86. The mounting plate 85 extends from the second sidewall 24_2 of the lifting arm housing towards the first sidewall 24_1 of the lifting arm housing, and, in this embodiment, is oriented substantially horizontally. However, in other embodiments the mounting plate 85 is oriented at an oblique angle to the horizontal. The mounting bracket 86 is mounted on an upwardly-facing surface of the mounting plate 85. Here, "upwardly-facing surface" refers to a surface which faces towards the top of the machine, when the machine is in its operating orientation with the ground engaging structure on the ground.

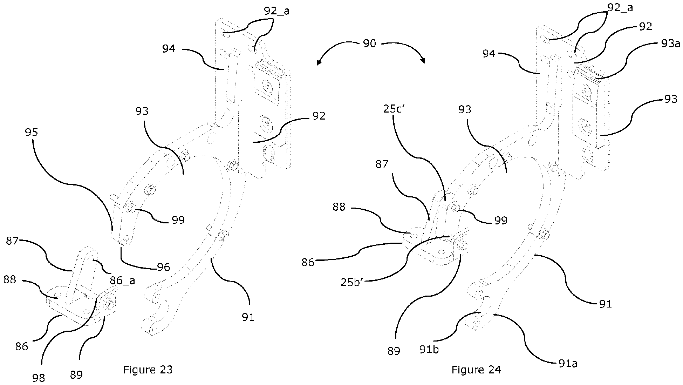

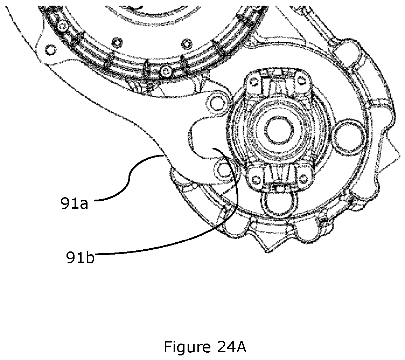

In this embodiment, the drive assembly unit 19 includes a drive assembly bracket 90 to which the electric motor 20 and the gear train 21 are secured. Figures 23 and 24 show the brackets 86 and 90 with the electric motor 20 and gear train 21 omitted for clarity. The drive assembly bracket 90 comprises a first part 91 and a second part 92. The first part 91 comprises a plate having a segmented annular shape defining a cavity 93. A surface of the plate defines an internal contour of the annulus which at least approximately matches the size and shape of an cylindrical surface of the electric motor 20. The electric motor 20 is received within the cavity 93 so as to be at least partially encircled by the drive assembly bracket 90, and supported thereby.

In this embodiment, the first part 91 surrounds the electric motor 20 over an angle of approximately 270 degrees around the motor's axis. However, in other embodiments the first part 91 may surround the motor 20 over an angle greater than or less than 270 degrees.

A first end 95 of the first part 91 defines a first lug. The first lug 95 defines a notch 96. In this embodiment, the notch 96 is flared outwardly at the open end. That is, the walls of the notch 96 diverge from one another such that the width of the notch 96 is greater at the open end than at the opposing end. In alternative embodiments, the notch is not flared.

A second end 91a of the first part 91 defines a notch 91b. As shown in Figure 24A, the notch 91b provides clearance for a corresponding feature of a gearbox of the machine, while two bolts pass through the holes in 91b to connect it to the gearbox, advantageously providing additional torsional support. In various embodiments, the corresponding feature of the gearbox may be a bearing housing or part of a rotating component such as a shaft or an output shaft of the gearbox. Such parts need to be able to rotate without obstruction. The notch 91b ensures there is sufficient space to prevent interference with rotation of the feature. In this embodiment, the notch 91b is flared to provide suitable clearance. In an alternative embodiment, the notch is not flared.

The second part 92 includes a plate 94 having a flat surface 94_a which engages an inboard face of the first sidewall 24_1. The second part 92 defines a number of apertures 92_a for securing the drive assembly bracket 90 and thus the drive assembly unit 19 to the first sidewall 24_1. In this embodiment, there are four apertures 92_a. However, in other embodiments, the second part 92 may include one, two or three apertures 92_a. In other embodiments, the second part 92 may include more than four apertures 92_a. In the illustrated embodiment, the apertures 92_a are slots, to allow for tolerance. Accordingly, the second part 92 is secured to the inboard face of the first sidewall 24_1 at the third mounting point 25c' by one or more suitable fasteners inserted in the apertures 92_a.

As shown in Figure 24, the drive assembly bracket 90 includes a wear pad 93 secured to the plate 94. The wear pad 93 is secured to an inboard side of the plate 94, i.e. the side of the plate 94 that is inboard when the drive assembly unit 19 is in an installed position. The wear pad 94 inhibits contact between the lifting arm and the drive assembly bracket 90 as the lifting arm is raised and lowered, and acts to align the lifting arm into the desired position. In this embodiment, the wear pad 19 is of nylon, so that contact with the lifting arm is unlikely to lead to damage of the lifting arm. In alternative embodiments, the wear pad 19 is of some other suitable material. in this embodiment, the wear pad 94 is substantially rectangular. An upper end 93a of the wear pad 93 is tapered, to facilitate gradual alignment of the lifting arm as the lifting arm is lowered. In this embodiment, the wear pad 93 is secured to the plate 94 by two fasteners, such as bolts. In alternative embodiments, the wear pad 93 is secured to the plate by some other suitable means.

Still referring to Figures 23 and 24, the mounting bracket 86 is a T-bracket and comprises a first leg 87 and a perpendicularly arranged second leg 88. A tab 89 extends from the first leg 87, substantially parallel to the second leg 88. The first leg 87 and the second leg 88 of the mounting bracket 86 together form the T-shape of the mounting bracket 86. The first leg 87 includes at least one aperture configured to receive a fastener in order to fix the mounting bracket 86 to the mounting plate 85.

A bolt 98 extends between the tab 89 and the second leg 88, substantially parallel to the first leg 87. The bolt 98 is received in the notch 96 on the first end 95 of the first part 91 of the drive assembly bracket 90 to form a pivot point between the drive assembly unit 19 and the mounting bracket 86. This pivot point serves as the second mounting point 25b'. The flared formation of the notch 96 improves ease of location of the drive assembly bracket 90 on the bolt 98.

During installation, and prior to the first drive assembly bracket 90 and drive assembly unit 19 being bolted or otherwise fixed on the chassis 24, the first drive assembly bracket 90 and drive assembly unit 19 can pivot about the second mounting point 25b' relative to the chassis 24, as will be described in more detail below. The bolt 98 may have a partially unthreaded shank to provide a substantially smooth bearing surface for the first end 95 of the first part 91 of the drive assembly bracket 90.

When installed, the drive assembly unit 19 is secured to the mounting bracket 86. In this embodiment, the second mounting bracket 86 includes an aperture 86_configured to receive a bolt 99 or other suitable fastener in order to secure the drive assembly bracket 90 thereto, thus defining the third mounting point 25c'. The combination of the second and third mounting points 25b', 25c' provides a suitably robust mounting of the drive assembly unit 19 to the mounting bracket 86.

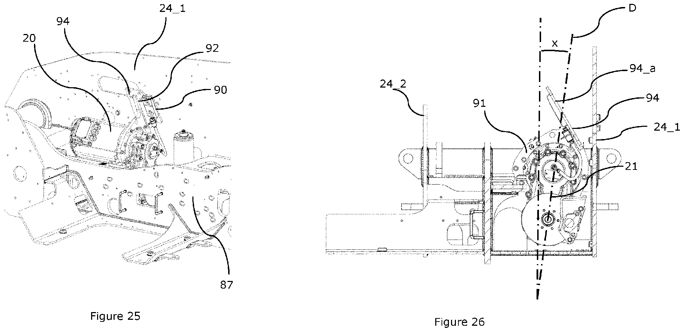

Referring to Figures 25 to 28, the installation of the drive assembly unit 19 of the working machine 10' will now be described. Upon installation of the drive assembly unit 19 on the machine 10, the drive assembly unit 19 is lowered, e.g. using a crane and sling, into position in an orientation such that a longitudinal axis D (see Figure 26) of the gear train 21 is at a first angle to the vertical. In this embodiment, the first angle is approximately 5 degrees. However, in other embodiments, the first angle is substantially zero, i.e. the axis D is substantially vertical in relation to the machine body. In an alternative embodiment, the first angle is some other suitable angle for installation of the drive assembly unit. The drive assembly unit 19 is mounted at the second mounting point 25b' by positioning the drive assembly unit 19 such that the bolt 98 can be received in the notch 96 at the first end 95 of the drive assembly bracket 90. The weight of the drive assembly unit 19 is consequently supported at least in part by the bolt 98 and the inboard mounting structure. Accordingly, the drive assembly unit 19 is stabilised and can be more easily manipulated into position for bolting or otherwise fixing to the chassis 24.

The drive assembly unit 19 is then pivoted about the pivot point until the axis D is at a second angle x to the vertical. In this orientation, the flat surface 94_a of the plate 94 forming the second part of the drive assembly bracket 90 is in contact with the inboard face of the first sidewall 24_1 at the first mounting point 25a'. Additionally, the bolt 99 is aligned with the aperture 86_a in the second mounting bracket 86. In this embodiment, the second angle x is 40° to the vertical in relation to the machine body. In alternative embodiments, the second angle is some other suitable angle, e.g. in the range 30° to 50°.

The plate 94 of the second part 92 of the drive assembly bracket 90 is then secured to the first sidewall 24_1 at the first mounting point 25a' by inserting fasteners in the apertures 92_a. The first part 91 of the drive assembly bracket 90 is then secured to the mounting bracket 86 by fastening the bolt 99 in the aperture 86_a at the second mounting point 25b'. Alternatively, the first part 91 of the drive assembly bracket 90 is fastened to the mounting bracket 86 at the second mounting point 25b' before fastening the second part 92 of the drive assembly bracket 90 to the first sidewall 24_1 at the first mounting point 25a'.

The present disclosure provides a material handling machine, e.g. a compact telehandler, having a large operator cab for improved operator comfort and safety. The compact telehandler may be trailer towable, however, this is not a limitation and the telehandler may have a weight which is above 2950kg in some examples. The compact telehandler may comprise a side mounted prime mover which extends through a sidewall of a lifting arm housing and under the lift arm. However, this is not a limitation and the prime mover may be rear-mounted in some examples.

The one or more embodiments are described above by way of example only and it will be appreciated that the variations are possible without departing from the scope of protection afforded by the appended claims.

Further aspects and embodiments of the invention are described with the use of the following ordered clauses:
1. A working machine having a front and a rear defined by the principal direction of travel, the machine defining a fore-aft centreline, the machine comprising:
   a body mounted on a ground-engaging structure to permit movement of the machine over the ground;
   an operator cab mounted on the body towards a first side of the centreline;
   a single lifting arm pivotably mounted towards an aft end of the body, the lifting arm being located within a lifting arm housing, and wherein the lifting arm housing comprises first and second sidewalls;
   a drive assembly comprising a first electric motor for providing power to the ground-engaging structure, wherein said first electric motor is located to a second side of the centreline, opposite the first side of the centreline; and
   at least one high voltage electric energy storage unit, located aft of the cab;
   wherein the or each electric energy storage unit is located to the cab side of the lifting arm housing.
2. The machine of clause 1, wherein the drive assembly comprises a gear train for transferring power from the first electric motor to the ground-engaging structure, wherein the first electric motor and/or the gear train extends at least in part beneath the lifting arm; optionally wherein the first electric motor and/or the gear train extends through an aperture in the first sidewall of the lifting arm housing and beneath the lifting arm; optionally wherein 20% to 60% of the first electric motor extends to the cab side of the first sidewall; optionally wherein 30% to 50% of the first electric motor extends to the cab side of the first sidewall; optionally wherein substantially 40% of the first electric motor extends to the cab side of the first sidewall.
3. The machine of clause 2, wherein the drive assembly comprises a brake assembly defining a longitudinal axis, wherein the gear train comprises an output having an axis of rotation, and wherein said output axis of rotation is co-axial with the brake assembly longitudinal axis.
4. The machine of clause 2 or clause 3, wherein the gear train defines a longitudinal axis between an input and an output thereof, and wherein the gear train longitudinal axis is at an angle of between 30° and 50° to the horizontal; optionally wherein the gear train longitudinal axis is at an angle of substantially 40° to the horizontal.
5. The machine of any one of clauses 2 to 4, further comprising a first drive shaft for transferring power from the gear train to a fore axle of the ground-engaging structure, and a second drive shaft for transferring power from the gear train to an aft axle of the ground-engaging structure.
6. The machine of any of clauses 1 to 5, wherein the drive assembly is mounted to the body at a plurality of drive assembly mounting points, wherein at least one drive assembly mounting point is provided on the first sidewall of the lifting arm housing, and at least one drive assembly mounting point is provided on the second sidewall of the lifting arm housing; optionally wherein the first sidewall is outboard of the second sidewall.
7. The machine of clause 6, wherein at least first and second drive assembly mounting points are provided on the first sidewall of the lifting arm housing, and at least one drive assembly mounting point is provided on the second sidewall of the lifting arm housing; optionally wherein said first drive assembly mounting point is provided above the aperture, and wherein said second drive assembly mounting point is provided below the aperture; optionally wherein the drive assembly is pivotable in relation to the first mounting point.
8. The machine of any preceding clause, wherein the machine body comprises an enclosure in which the or each electric energy storage unit is housed; optionally wherein the enclosure is offset inboard from the rear of the machine; and/or wherein the enclosure is located to the cab side of the lifting arm housing.
9. The machine of clause 8, wherein the machine further comprises an electric energy storage unit charger for charging the or each electric energy storage unit, and a charge port for connection of the charger to an external power source, and wherein the charger and the charge port are included in a cartridge; optionally wherein the cartridge is configured for installation within said enclosure.
10. The machine of clause 9, wherein the operator cab comprises a door on the cab side of the body, and wherein the charge point is located on the cab side of the body; and/or wherein the charge point is inset from an aft-most point of the machine.
11. The machine of any preceding clause, comprising two or more electric energy storage units, wherein said electric energy storage units are secured to one another so as to be configured for installation on the machine as a single subassembly; optionally wherein the machine comprises an upper layer and a lower layer of electric energy storage units offset from one another in at least one horizontal direction.
12. The machine of any preceding clause, wherein the or each electric energy storage unit is elongate, such that a longitudinal axis is defined by said electric energy storage unit, and wherein the or each electric energy storage unit is orientated such that said longitudinal axis is substantially vertical; optionally wherein the machine comprises a plurality of electric energy storage units arranged adjacent one another, and/or wherein the or each electric energy storage unit comprises a connector located at an upper end thereof.
13. The machine of any preceding clause, further comprising a side enclosure at the lifting arm side of the body, and a first inverter associated with the first electric motor, wherein the first inverter is located within the side enclosure; and/or wherein the first electric motor is at least partially located within the side enclosure; and/or wherein the machine further comprises a hydraulic pump for actuation of the lifting arm, and a hydraulic tank associated with the hydraulic pump, and wherein the hydraulic pump and the hydraulic tank are located within the side enclosure; optionally wherein the hydraulic tank is shaped so as to fit within a space envelope defined at least in part by said first electric motor.
14. The machine of clause 13, further comprising a second electric motor configured for actuation of said hydraulic pump, wherein the second electric motor is located within the side enclosure; optionally wherein the machine further comprises a second inverter associated with the second electric motor, and wherein the second inverter is located within the side enclosure.
15. The machine of clause 13 or clause 14, further comprising an auxiliary electric energy storage unit for auxiliary systems, wherein the auxiliary electric energy storage unit is located within the side enclosure; optionally wherein the machine further comprises, located within the side enclosure, a brake fluid reservoir, and/or a washer fluid reservoir, and/or an isolator, and/or a power distribution unit.
16. The machine according to any one of clauses 13 to 15, further comprising a mounting bracket located within the side enclosure, wherein the mounting bracket is configured for mounting at least two components, for example a hydraulic tank and an auxiliary electric energy storage unit.
17. The machine of any preceding clause, further comprising a valve block, wherein the valve block is secured to an underside of the machine; optionally wherein the valve block comprises electro-hydraulic valves, and/or wherein the machine comprises a mounting cradle for securing said valve block to the machine, and wherein said mounting cradle is secured to the body of the machine; optionally wherein said mounting cradle is substantially U-shaped.
18. The machine according to any preceding clause, wherein the cab is mountable to the machine as a unit comprising a floorplate, a roof, an aft wall, a front wall, and first and second sidewalls.
19. A method of installing a drive assembly according to any preceding clause, wherein the drive assembly defines a longitudinal axis; the method comprising the steps of:
   a) orienting the drive assembly such that the longitudinal axis is at a first angle to the horizontal;
   b) securing the drive assembly to the first sidewall at a first mounting point;
   c) pivoting the drive assembly about the first mounting point such that the longitudinal axis is at a second angle to the horizontal; and
   d) securing the drive assembly to the body at a second mounting point.
20. The method of clause 19, wherein the first angle is substantially zero; and/or wherein the second angle is in the range of 30° to 50°; optionally wherein the second angle is substantially 40°.
21. The method of clause 19 or clause 20, wherein the second mounting point is at the first sidewall; and/or further comprising the step of:
   e) securing the drive assembly to the body at a third mounting point; optionally wherein the third mounting point is at the second sidewall.
22. A working machine having a front and a rear defined by the principal direction of travel, the machine defining a fore-aft centreline, the machine comprising:
   a body mounted on a ground-engaging structure to permit movement of the machine over the ground;
   an operator cab mounted on the body towards a first side of the centreline;
   a single lifting arm pivotably mounted towards an aft end of the body, the lifting arm being located within a lifting arm housing, and wherein the lifting arm housing comprises first and second sidewalls;
   a drive assembly comprising a first electric motor for providing power to the ground-engaging structure, and a gear train for transferring power from the first electric motor to the ground-engaging structure;
   wherein the first electric motor and/or the gear train extends at least in part beneath the lifting arm.
23. A machine according to clause 22, wherein the first electric motor is located to a second side of the centreline, opposite the first side of the centreline; optionally wherein the first electric motor and/or the gear train extends through an aperture in the first sidewall of the lifting arm housing and beneath the lifting arm; optionally wherein 20% to 60% of the first electric motor extends to the cab side of the first sidewall; optionally wherein 30% to 50% of the first electric motor extends to the cab side of the first sidewall; optionally wherein substantially 40% of the first electric motor extends to the cab side of the first sidewall.
24. The machine of clause 23, wherein the drive assembly comprises a brake assembly defining a longitudinal axis, wherein the gear train comprises an output having an axis of rotation, and wherein said output axis of rotation is co-axial with the brake assembly longitudinal axis.
25. The machine of clause 23 or clause 24, wherein the gear train defines a longitudinal axis between an input and an output thereof, and wherein the gear train longitudinal axis is at an angle of between 30° and 50° to the horizontal; optionally wherein the gear train longitudinal axis is at an angle of substantially 40° to the horizontal.
26. The machine of any one of clauses 23 to 25, further comprising a first drive shaft for transferring power from the gear train to a fore axle of the ground-engaging structure, and a second drive shaft for transferring power from the gear train to an aft axle of the ground-engaging structure.
27. The machine of any of clauses 23 to 26, wherein the drive assembly is mounted to the body at a plurality of drive assembly mounting points, wherein at least one drive assembly mounting point is provided on the first sidewall of the lifting arm housing, and at least one drive assembly mounting point is provided on the second sidewall of the lifting arm housing; optionally wherein the first sidewall is outboard of the second sidewall.
28. The machine of clause 27, wherein at least first and second drive assembly mounting points are provided on the first sidewall of the lifting arm housing, and at least one drive assembly mounting point is provided on the second sidewall of the lifting arm housing; optionally wherein said first drive assembly mounting point is provided above the aperture, and wherein said second drive assembly mounting point is provided below the aperture; optionally wherein the drive assembly is pivotable in relation to the first mounting point.
29. A method of installing a drive assembly on a working machine having a body mounted on a ground-engaging structure to permit movement of the machine over the ground; wherein the drive assembly comprises an electric motor for providing power to the ground-engaging and a gear train, the gear train defining a longitudinal axis between an input and an output thereof; the method comprising the steps of:
   a) orienting the drive assembly such that the longitudinal axis is at a first angle to the horizontal;
   b) securing the drive assembly to the machine at a first mounting point;
   c) pivoting the drive assembly about the first mounting point such that the longitudinal axis is at a second angle to the horizontal; and
   d) securing the drive assembly to the body at a second mounting point.
30. The method of clause 29, wherein the first angle is substantially zero; and/or wherein the second angle is in the range of 30° to 50°; optionally wherein the second angle is substantially 40°.
31. The method of clause 29 or clause 30, wherein the machine comprises a single lifting arm pivotably mounted towards an aft end of the body, the lifting arm being located within a lifting arm housing, and wherein the lifting arm housing comprises first and second sidewalls, and wherein said first mounting point is at the first sidewall, and/or wherein the second mounting point is at the first sidewall; and/or further comprising the step of:
   e) securing the drive assembly to the body at a third mounting point; optionally wherein the third mounting point is at the second sidewall.
32. The method of clause 31, wherein the electric motor and/or the gear train extends through an aperture in the first sidewall of the lifting arm housing and beneath the lifting arm.
33. A working machine having a front and a rear defined by the principal direction of travel, the machine defining a fore-aft centreline, the machine comprising:
   a body mounted on a ground-engaging structure to permit movement of the machine over the ground;
   an operator cab mounted on the body towards a first side of the centreline;
   a single lifting arm pivotably mounted towards an aft end of the body, the lifting arm being located within a lifting arm housing, and wherein the lifting arm housing comprises first and second sidewalls; and
   at least one high voltage electric energy storage unit, located aft of the cab;
   wherein the or each electric energy storage unit is located to the cab side of the lifting arm housing.
34. The machine of clause 33, wherein the machine body comprises an enclosure in which the or each electric energy storage unit is housed; optionally wherein the enclosure is offset inboard from the rear of the machine; and/or wherein the enclosure is located to the cab side of the lifting arm housing.
35. The machine of clause 34, wherein the machine further comprises an electric energy storage unit charger for charging the or each electric energy storage unit, and a charge port for connection of the charger to an external power source, and wherein the charger and the charge port are included in a cartridge; optionally wherein the cartridge is configured for installation within said enclosure.
36. The machine of clause 35, wherein the operator cab comprises a door on the cab side of the body, and wherein the charge point is located on the cab side of the body; and/or wherein the charge point is inset from an aft-most point of the machine.
37. The machine of any one of clauses 33 to 36, comprising two or more electric energy storage units, wherein said electric energy storage units are secured to one another so as to be configured for installation on the machine as a single subassembly; optionally wherein the machine comprises an upper layer and a lower layer of electric energy storage units offset from one another in at least one horizontal direction.
38. The machine of any one of clauses 33 to 37, wherein the or each electric energy storage unit is elongate, such that a longitudinal axis is defined by said electric energy storage unit, and wherein the or each electric energy storage unit is orientated such that said longitudinal axis is substantially vertical; optionally wherein the machine comprises a plurality of electric energy storage units arranged adjacent one another, and/or wherein the or each electric energy storage unit comprises a connector located at an upper end thereof.
39. A method of installing a plurality of electric energy storage units in a working machine according to any one of clauses 33 to 38, the method comprising the steps of:
   a) securing said electric energy storage units to one another to form a single subassembly; and
   b) installing said subassembly on the machine body.
40. The method according to clause 39, further comprising a single bracket by which said electric energy storage units are secured to one another in step a).
41. The method according to clause 39 or clause 40 when dependent on clause 35, further comprising the step of:
   c) securing the charger and the charge port to a panel to form a cartridge; and
   d) installing said cartridge on the machine body.
42. A working machine having a front and a rear defined by the principal direction of travel, the machine defining a fore-aft centreline, the machine comprising:
   a body mounted on a ground-engaging structure to permit movement of the machine over the ground;
   an operator cab mounted on the body towards a first side of the centreline;
   a single lifting arm pivotably mounted towards an aft end of the body, the lifting arm being located within a lifting arm housing, and wherein the lifting arm housing comprises first and second sidewalls; and
   a valve block, wherein the valve block is secured to an underside of the machine.
43. The machine of clause 42, wherein the valve block comprises electro-hydraulic valves.
44. The machine of clause 42 or clause 43, wherein the machine comprises a mounting cradle for securing said valve block to the machine, and wherein said mounting cradle is secured to the body of the machine; optionally wherein said mounting cradle is substantially U-shaped.
45. The machine according to any one of clauses 42 to 44, wherein the cab is mountable to the machine as a unit comprising a floorplate, a roof, an aft wall, a front wall, and first and second sidewalls.
46. A method of installing a valve block on a working machine according to any one of clauses 42 to 45, the method comprising the step of:
   a) securing the valve block to an underside of the machine; optionally securing the valve block to the machine with a mounting cradle; optionally wherein said mounting cradle is substantially U-shaped.
47. The method of clause 46, further comprising the step of:
   b) installing a cab comprising a floorplate, a roof, an aft wall, a front wall, and first and second sidewalls on the machine as a unit; optionally comprising the step of, wherein the cab comprises one or more control devices for controlling the ground engaging structure and/or an operation of the lifting arm:
   c) connecting said control system to the valve block.
48. A working machine having a front and a rear defined by the principal direction of travel, the machine defining a fore-aft centreline, the machine comprising:
   a body mounted on a ground-engaging structure to permit movement of the machine over the ground;
   an operator cab mounted on the body towards a first side of the fore-aft centreline;
   a single lifting arm pivotably mounted towards an aft end of the body; and
   a drive assembly for providing power to the ground-engaging structure, the drive assembly comprising an electric motor and a gear train for transferring power from the first electric motor to the ground-engaging structure, wherein the gear train extends at least in part beneath the lifting arm,
   wherein the drive assembly is mounted to the body at a plurality of drive assembly mounting points; and
   wherein the drive assembly is configured to be pivotable about at least one of said drive assembly mounting points between a first orientation and a second orientation.
49. The machine of clause 48, wherein the drive assembly is fixed in the second orientation during operation of the machine.
50. The machine of clause 48 or clause 49, wherein the gear train defines a longitudinal axis between an input and an output thereof, and wherein the gear train longitudinal axis is pivotable between a first angle, when the drive assembly is in the first orientation, and a second angle, when the drive assembly is in the second orientation; optionally wherein the drive assembly is configured to be pivotable about said drive assembly mounting point such that the gear train longitudinal axis is pivotable through an angle in the range of 30° to 50°; optionally wherein the drive assembly is configured to be pivotable about said drive assembly mounting point such that the gear train longitudinal axis is pivotable through an angle of substantially 40°.
51. The machine of clause 50, wherein the first angle is within 5° of the vertical; optionally wherein the second angle is within the range of 35° to 55° of the vertical; optionally wherein the second angle is within the range of 45° of the vertical.
52. The machine of any one of clauses 48 to 51, wherein the drive assembly mounting points comprise a first, outboard, drive assembly mounting point and a second, inboard, drive assembly mounting point, and wherein the drive assembly is configured to be pivotable about the second drive assembly mounting point.
53. The machine of any one of clauses 48 to 52, wherein the lifting arm is located within a lifting arm housing, the lifting arm housing comprising first and second sidewalls, the first sidewall being outboard of the second sidewall; optionally wherein the drive assembly is located at least partially between the first and second sidewalls of the lifting arm housing.
54. The machine of clause 53 when dependent on clause 52, wherein the first drive assembly mounting point is provided on the first sidewall of the lifting arm housing and the second drive assembly mounting point is outboard of the second sidewall of the lifting arm housing; optionally wherein the second drive assembly mounting point is offset from the second sidewall of the lifting arm housing in an outboard direction.
55. The machine of clause 54, further comprising an inboard mounting structure,
   wherein the second drive assembly mounting point is provided on the inboard mounting structure; and
   wherein the inboard mounting structure includes a drive assembly mounting plate; optionally wherein said drive assembly mounting plate extends from the second sidewall of the lifting arm housing towards the first sidewall of the lifting arm housing.
56. The machine of clause 55, further comprising a first bracket fixed to the drive assembly, wherein the machine further comprises a lug and a pin, the lug comprising an opening, notch or groove in which the pin is received, one of the lug and the pin being on the first bracket and the other of the lug and the pin being on the inboard mounting structure and thereby defining the second drive assembly mounting point, the lug and the pin being pivotable with respect to one another; optionally wherein said opening, notch or groove diverges at an open end thereof.
57. The machine of clause 56, wherein the first bracket defines the lug, and wherein the pin is supported by the inboard mounting structure.
58. The machine of clause 56 or 57, wherein the inboard mounting structure comprises a second bracket, the pin being supported by the second bracket, wherein the second bracket is mounted on the drive assembly mounting plate.
59. The machine of clause 58, wherein in the second orientation, the first bracket is secured to the second bracket at a third mounting point; optionally wherein the first bracket is secured to the second bracket by a fastener; e.g. a bolt.
60. The machine of any one of clauses 56 to 59, wherein the first bracket comprises a first part and a second part, the first part including a surface which engages the drive assembly and the second part being shaped to conform to the first sidewall of the lifting arm housing at the first drive assembly mounting point; optionally wherein the first part at least partially encircles the first electric motor; optionally wherein the second part is substantially above the drive assembly when the drive assembly is in the second orientation.
61. The machine of clause 60, wherein the first bracket comprises a wear pad configured to protect the first bracket from the lifting arm; optionally wherein the wear pad is secured to the second part; optionally wherein the wear pad is of a plastics material, e.g. nylon.
62. The machine of any one of clauses 55 to 61, wherein a clearance envelope is defined between the inboard mounting structure and the first sidewall of the lifting arm housing,
   wherein the clearance envelope is configured to accommodate rotation of the first bracket and the drive assembly about the second mounting point, as a unit, between the first orientation and the second orientation.
63. A method of installing a drive assembly in a working machine having a front and a rear defined by the principal direction of travel, the machine defining a fore-aft centreline, the working machine having a body mounted on a ground-engaging structure to permit movement of the machine over the ground; an operator cab mounted on the body towards a first side of the fore-aft centreline; a single lifting arm pivotably mounted towards an aft end of the body; and a drive assembly for providing power to the ground-engaging structure, the drive assembly comprising an electric motor and a gear train for transferring power from the first electric motor to the ground-engaging structure; wherein the method comprises the steps of:
   a) supporting the drive assembly at a drive assembly mounting point in a first orientation; and
   b) pivoting the drive assembly about said drive assembly mounting point from the first orientation to a second orientation, where the gear train extends at least in part beneath the lifting arm.
64. The method of clause 63, further comprising the step of:
   c) fixing the drive assembly to the body at a further drive assembly mounting point whilst the drive assembly is in the second orientation.
65. The method of clause 63 or clause 64, wherein the gear train defines a longitudinal axis between an input and an output thereof, and wherein step b) comprises pivoting the drive assembly about said drive assembly mounting point such that the gear train longitudinal axis is pivoted from a first angle, where the drive assembly is in the first orientation, to a second angle, where the drive assembly is in the second orientation, by an angular displacement; optionally wherein the angular displacement is in the range of 30° to 50°; optionally wherein the angular displacement is substantially 40°.
66. The method of clause 65, wherein the first angle is within 5° of the vertical; optionally wherein the second angle is within the range of 35° to 55° of the vertical; optionally wherein the second angle is within the range of 45° of the vertical.
67. The method of any one of clauses 63 to 66, wherein the lifting arm is located within a lifting arm housing, the lifting arm housing comprising first and second sidewalls, the first sidewall being outboard of the second sidewall; and wherein the method comprises the step of securing the drive assembly at least partially between the first and second sidewalls of the lifting arm housing.
68. The method of clause 67, wherein said drive assembly mounting point is provided on one of the first and second sidewalls of the lifting arm housing; optionally, wherein said drive assembly mounting point is provided on the second sidewall of the lifting arm housing.
69. The method of clause 67 or clause 68, wherein the method comprises mounting the drive assembly to the body at a plurality of drive assembly mounting points, the plurality of drive assembly mounting points comprising a first, outboard, drive assembly mounting point and a second, inboard, drive assembly mounting point, the first drive assembly mounting point being provided on the first sidewall of the lifting arm housing, wherein the second drive assembly mounting point is outboard of the second sidewall of the lifting arm housing; and wherein in step b) the drive assembly is pivoted about the second drive assembly mounting point; optionally wherein the second drive assembly mounting point is offset from the second sidewall of the lifting arm housing in an outboard direction.
70. The method of clause 68 when dependent on clause 63, wherein in step c), the drive assembly is fixed to the body at the first drive assembly mounting point.
71. The method of clause 69 or clause 70, wherein the second drive assembly mounting point is provided on an inboard mounting structure of the working machine,
   wherein the inboard mounting structure includes a drive assembly mounting plate; optionally wherein said drive assembly mounting plate extends from the second sidewall of the lifting arm housing towards the first sidewall of the lifting arm housing.
72. The method of any one of clauses 68 to 71, wherein a first bracket is connected to the drive assembly, the first bracket comprising a first part and a second part, the first part being fixed to the drive assembly and being pivotably connected to a second bracket at the first drive assembly mounting point, the second part having a surface shaped to conform to the first sidewall at the first drive assembly mounting point, wherein step b) brings the surface of the plate into contact with the first sidewall of the lifting arm housing.
73. The method of clause 72 when dependent on clause 64, wherein step c) comprises fixing the second part of the first bracket to the first sidewall of the lifting arm housing at the first drive assembly mounting point.
74. The method of any one of clauses 63 to 73, further comprising the step of:
   d) prior to step a), lowering the drive assembly such that the drive assembly is supported at said drive assembly mounting point in said first orientation.

It shall be appreciated that features described in relation to one embodiment (or above clause) of the present invention may be incorporated into other aspects of the present invention.

## Claims

1. A working machine having a front and a rear defined by the principal direction of travel, the machine defining a fore-aft centreline, the machine comprising:
a body mounted on a ground-engaging structure to permit movement of the machine over the ground;
an operator cab mounted on the body towards a first side of the centreline;
a single lifting arm pivotably mounted towards an aft end of the body, the lifting arm being located within a lifting arm housing, and wherein the lifting arm housing comprises first and second sidewalls;
a drive assembly comprising a first electric motor for providing power to the ground-engaging structure, wherein said first electric motor is located to a second side of the centreline, opposite the first side of the centreline; and
at least one high voltage electric energy storage unit, located aft of the cab;
wherein the or each electric energy storage unit is located to the cab side of the lifting arm housing.

2. The machine of claim 1, wherein the drive assembly comprises a gear train for transferring power from the first electric motor to the ground-engaging structure, wherein the first electric motor and/or the gear train extends at least in part beneath the lifting arm; optionally wherein the first electric motor and/or the gear train extends through an aperture in the first sidewall of the lifting arm housing and beneath the lifting arm; optionally wherein 20% to 60% of the first electric motor extends to the cab side of the first sidewall; optionally wherein 30% to 50% of the first electric motor extends to the cab side of the first sidewall; optionally wherein substantially 40% of the first electric motor extends to the cab side of the first sidewall; optionally wherein the drive assembly comprises a brake assembly defining a longitudinal axis, wherein the gear train comprises an output having an axis of rotation, and wherein said output axis of rotation is co-axial with the brake assembly longitudinal axis; optionally wherein the gear train defines a longitudinal axis between an input and an output thereof, and wherein the gear train longitudinal axis is at an angle of between 30° and 50° to the horizontal; optionally wherein the gear train longitudinal axis is at an angle of substantially 40° to the horizontal; optionally wherein the method further comprises a first drive shaft for transferring power from the gear train to a fore axle of the ground-engaging structure, and a second drive shaft for transferring power from the gear train to an aft axle of the ground-engaging structure.

3. The machine of claim 1 or 2, wherein the drive assembly is mounted to the body at a plurality of drive assembly mounting points, wherein at least one drive assembly mounting point is provided on the first sidewall of the lifting arm housing, and at least one drive assembly mounting point is provided on the second sidewall of the lifting arm housing; optionally wherein the first sidewall is outboard of the second sidewall; optionally wherein at least first and second drive assembly mounting points are provided on the first sidewall of the lifting arm housing, and at least one drive assembly mounting point is provided on the second sidewall of the lifting arm housing; optionally wherein said first drive assembly mounting point is provided above the aperture, and wherein said second drive assembly mounting point is provided below the aperture; optionally wherein the drive assembly is pivotable in relation to the first mounting point.

4. The machine of any preceding claim, wherein the machine body comprises an enclosure in which the or each electric energy storage unit is housed; optionally wherein the enclosure is offset inboard from the rear of the machine; and/or wherein the enclosure is located to the cab side of the lifting arm housing; optionally wherein the machine further comprises an electric energy storage unit charger for charging the or each electric energy storage unit, and a charge port for connection of the charger to an external power source, and wherein the charger and the charge port are included in a cartridge; optionally wherein the cartridge is configured for installation within said enclosure; optionally wherein the operator cab comprises a door on the cab side of the body, and wherein the charge point is located on the cab side of the body; and/or wherein the charge point is inset from an aft-most point of the machine.

5. The machine of any preceding claim, comprising two or more electric energy storage units, wherein said electric energy storage units are secured to one another so as to be configured for installation on the machine as a single subassembly; optionally wherein the machine comprises an upper layer and a lower layer of electric energy storage units offset from one another in at least one horizontal direction; and/or wherein the or each electric energy storage unit is elongate, such that a longitudinal axis is defined by said electric energy storage unit, and wherein the or each electric energy storage unit is orientated such that said longitudinal axis is substantially vertical; optionally wherein the machine comprises a plurality of electric energy storage units arranged adjacent one another, and/or wherein the or each electric energy storage unit comprises a connector located at an upper end thereof.

6. The machine of any preceding claim, further comprising a side enclosure at the lifting arm side of the body, and a first inverter associated with the first electric motor, wherein the first inverter is located within the side enclosure; and/or wherein the first electric motor is at least partially located within the side enclosure; and/or wherein the machine further comprises a hydraulic pump for actuation of the lifting arm, and a hydraulic tank associated with the hydraulic pump, and wherein the hydraulic pump and the hydraulic tank are located within the side enclosure; optionally wherein the hydraulic tank is shaped so as to fit within a space envelope defined at least in part by said first electric motor; optionally further comprising a second electric motor configured for actuation of said hydraulic pump, wherein the second electric motor is located within the side enclosure; optionally wherein the machine further comprises a second inverter associated with the second electric motor, and wherein the second inverter is located within the side enclosure; optionally; further comprising an auxiliary electric energy storage unit for auxiliary systems, wherein the auxiliary electric energy storage unit is located within the side enclosure; optionally wherein the machine further comprises, located within the side enclosure, a brake fluid reservoir, and/or a washer fluid reservoir, and/or an isolator, and/or a power distribution unit; optionally further comprising a mounting bracket located within the side enclosure, wherein the mounting bracket is configured for mounting at least two components, for example a hydraulic tank and an auxiliary electric energy storage unit.

7. The machine of any preceding claim, further comprising a valve block, wherein the valve block is secured to an underside of the machine; optionally wherein the valve block comprises electro-hydraulic valves, and/or wherein the machine comprises a mounting cradle for securing said valve block to the machine, and wherein said mounting cradle is secured to the body of the machine; optionally wherein said mounting cradle is substantially U-shaped.

8. The machine according to any preceding claim, wherein the cab is mountable to the machine as a unit comprising a floorplate, a roof, an aft wall, a front wall, and first and second sidewalls.

9. A method of installing a drive assembly according to any preceding claim, wherein the drive assembly defines a longitudinal axis; the method comprising the steps of:
a) orienting the drive assembly such that the longitudinal axis is at a first angle to the horizontal;
b) securing the drive assembly to the first sidewall at a first mounting point;
c) pivoting the drive assembly about the first mounting point such that the longitudinal axis is at a second angle to the horizontal; and
d) securing the drive assembly to the body at a second mounting point.

10. The method of claim 9, wherein the first angle is substantially zero; and/or wherein the second angle is in the range of 30° to 50°; optionally wherein the second angle is substantially 40°; and/or, wherein the second mounting point is at the first sidewall; and/or further comprising the step of:
e) securing the drive assembly to the body at a third mounting point; optionally wherein the third mounting point is at the second sidewall.

11. A working machine having a front and a rear defined by the principal direction of travel, the machine defining a fore-aft centreline, the machine comprising:
a body mounted on a ground-engaging structure to permit movement of the machine over the ground;
an operator cab mounted on the body towards a first side of the centreline;
a single lifting arm pivotably mounted towards an aft end of the body, the lifting arm being located within a lifting arm housing, and wherein the lifting arm housing comprises first and second sidewalls; and
at least one high voltage electric energy storage unit, located aft of the cab;
wherein the or each electric energy storage unit is located to the cab side of the lifting arm housing.

12. The machine of claim 11, wherein the machine body comprises an enclosure in which the or each electric energy storage unit is housed; optionally wherein the enclosure is offset inboard from the rear of the machine; and/or wherein the enclosure is located to the cab side of the lifting arm housing; optionally wherein the machine further comprises an electric energy storage unit charger for charging the or each electric energy storage unit, and a charge port for connection of the charger to an external power source, and wherein the charger and the charge port are included in a cartridge; optionally wherein the cartridge is configured for installation within said enclosure; optionally wherein the operator cab comprises a door on the cab side of the body, and wherein the charge point is located on the cab side of the body; and/or wherein the charge point is inset from an aft-most point of the machine.

13. The machine of claim 11 or 12, comprising two or more electric energy storage units, wherein said electric energy storage units are secured to one another so as to be configured for installation on the machine as a single subassembly; optionally wherein the machine comprises an upper layer and a lower layer of electric energy storage units offset from one another in at least one horizontal direction; and/or wherein the or each electric energy storage unit is elongate, such that a longitudinal axis is defined by said electric energy storage unit, and wherein the or each electric energy storage unit is orientated such that said longitudinal axis is substantially vertical; optionally wherein the machine comprises a plurality of electric energy storage units arranged adjacent one another, and/or wherein the or each electric energy storage unit comprises a connector located at an upper end thereof.

14. A method of installing a plurality of electric energy storage units in a working machine according to any one of claims 11 to 13, the method comprising the steps of:
a) securing said electric energy storage units to one another to form a single subassembly; and
b) installing said subassembly on the machine body.

15. The method according to claim 14, further comprising a single bracket by which said electric energy storage units are secured to one another in step a); and/or wherein the machine further comprises an electric energy storage unit charger for charging the or each electric energy storage unit, and a charge port for connection of the charger to an external power source, and wherein the charger and the charge port are included in a cartridge, the method further comprising the step of:
c) securing the charger and the charge port to a panel to form a cartridge; and
d) installing said cartridge on the machine body.
